(19) Europäisches Patentamt / European Patent Office / Office européen des brevets

(11) **EP 4 746 470 A1**

(12) **EUROPEAN PATENT APPLICATION**
published in accordance with Art. 153(4) EPC

(43) Date of publication:
**20.05.2026 Bulletin 2026/21**

(21) Application number: **24853536.1**

(22) Date of filing: **29.07.2024**

(51) International Patent Classification (IPC):
*H04W 8/24* *(2009.01)*

(52) Cooperative Patent Classification (CPC):
**H04L 5/00; H04W 8/24; H04W 72/044;
H04W 72/0453**

(86) International application number:
**PCT/CN2024/108084**

(87) International publication number:
**WO 2025/036124 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 11.08.2023 CN 202311022708
23.09.2023 CN 202311243053

(71) Applicant: **Huawei Technologies Co., Ltd.
Shenzhen, Guangdong 518129 (CN)**

(72) Inventors:
• **SHA, Tong
Shenzhen, Guangdong 518129 (CN)**
• **LI, Bingzhao
Shenzhen, Guangdong 518129 (CN)**

(74) Representative: **MERH-IP Matias Erny Reichl
Hoffmann
Patentanwälte PartG mbB
Paul-Heyse-Straße 29
80336 München (DE)**

(54) **COMMUNICATION METHOD AND APPARATUS**

(57) A communication method and apparatus are provided. The communication method includes: receiving a capability enquiry request; and sending capability information, where the capability information includes first information, the first information indicates a total aggregated bandwidth supported by a first band combination, the first band combination includes at least one band, and each of the at least one band includes at least one carrier. A channel bandwidth supported by a first carrier is associated with the first information, the first carrier is used for communication between a terminal device and a network device, and the first carrier belongs to a first band in the first band combination. Therefore, a channel bandwidth of a carrier included in a band in a band combination is determined by using a total aggregated bandwidth and a channel bandwidth of the band.

[FIG. 4]

**Description**

This application claims priorities to Chinese Patent Application No. 202311022708.2, filed with the China National Intellectual Property Administration on August 11, 2023 and entitled "COMMUNICATION METHOD AND APPARATUS", and to Chinese Patent Application No. 202311243053.1, filed with the China National Intellectual Property Administration on September 23, 2023 and entitled "COMMUNICATION METHOD AND APPARATUS", which are incorporated herein by reference in their entireties.

TECHNICAL FIELD

This application relates to the field of wireless communication technologies, and in particular, to a communication method and apparatus.

BACKGROUND

A band combination (band combination, BC) usually indicates a carrier aggregation or dual connectivity capability supported by a terminal device, to be specific, carriers on one or more different bands are aggregated together, to increase a data transmission rate. On each carrier in the band combination, the terminal device supports communication with a network device at a specific channel bandwidth. The terminal device may support a plurality of bands in each BC, and each band may include a plurality of carriers. Due to a limitation of a hardware capability, a total bandwidth capability supported by the terminal device in one BC may be limited, and channel bandwidths supported on different carriers (component carrier, CC) in the BC may have different combinations.

With evolution of spectrum and operators' deployment requirements for different bandwidths, bandwidth combinations defined in a protocol are gradually enriched. Therefore, how to report a channel bandwidth capability that can be supported by each carrier in a band combination to the network device to implement normal communication is an urgent problem to be resolved.

SUMMARY

This application provides a communication method and apparatus, to determine, by using a total aggregated bandwidth and a channel bandwidth of a band, a channel bandwidth of a carrier included in a band in a band combination.

According to a first aspect, a communication method is provided. The method includes: receiving a capability enquiry request; and sending capability information, where the capability information includes first information, the first information indicates a total aggregated bandwidth supported by a first band combination, the first band combination includes at least one band, and each of the at least one band includes at least one carrier. A channel bandwidth supported by a first carrier is associated with the first information, the first carrier is used for communication between a terminal device and a network device, and the first carrier belongs to a first band in the first band combination.

The total aggregated bandwidth may also be a total bandwidth or a maximum aggregated bandwidth (maximum aggregated bandwidth). Therefore, when receiving the first information indicating a total aggregated bandwidth of a band combination, the network device may determine, based on an association between a total aggregated bandwidth and a channel bandwidth of a carrier, a channel bandwidth supported by a carrier included in the band combination, and allocate, based on a channel bandwidth of a carrier that is supported by the terminal device, a frequency domain resource to the terminal device on the carrier, thereby implementing normal communication between the terminal device and the network device.

With reference to the first aspect, in some implementations of the first aspect, the channel bandwidth supported by the first carrier is less than or equal to a maximum value of a channel bandwidth supported by the first band, and a sum of channel bandwidths supported by a plurality of carriers is less than or equal to the total aggregated bandwidth supported by the first band combination, where the plurality of carriers are all carriers in all bands included in the first band combination. In other words, a channel bandwidth of one carrier in the first band combination needs to be less than a maximum value of a channel bandwidth of a band to which the carrier belongs, and channel bandwidths of all carriers in the first band combination need to be equal to the total aggregated bandwidth. Therefore, the network device can determine a channel bandwidth of a carrier based on a channel bandwidth of a band and the total aggregated bandwidth.

In some implementations, a channel bandwidth supported by a first uplink carrier is less than or equal to a maximum value of a channel bandwidth supported by the first band, and a sum of channel bandwidths supported by a plurality of uplink carriers is less than or equal to a total uplink aggregated bandwidth supported by the first band combination, where the plurality of uplink carriers are all uplink carriers in all bands included in the first band combination.

In some implementations, a channel bandwidth supported by a first downlink carrier is less than or equal to a maximum value of a channel bandwidth supported by the first band, and a sum of channel bandwidths supported by a plurality of downlink carriers is less than or equal to a total downlink aggregated bandwidth supported by the first band combination, where the plurality of downlink carriers are all downlink carriers in all bands included in the first band combination.

In some implementations, a channel bandwidth supported by a first time division duplex carrier is less than or equal to a maximum value of a channel bandwidth supported by the first band, and a sum of channel bandwidths supported by a plurality of time division duplex carriers is less than or equal to a total time division duplex aggregated bandwidth supported by the first band combination, where the plurality of time division duplex carriers are all time division duplex carriers in all bands included in the first band combination.

In some implementations, a channel bandwidth supported by a first frequency division duplex carrier is less than or equal to a maximum value of a channel bandwidth supported by the first band, and a sum of channel bandwidths supported by a plurality of frequency division duplex carriers is less than or equal to a total frequency division duplex aggregated bandwidth supported by the first band combination, where the plurality of frequency division duplex carriers are all frequency division duplex carriers in all bands included in the first band combination.

With reference to the first aspect, in some implementations of the first aspect, a channel bandwidth supported by a second carrier is less than or equal to a maximum value of a channel bandwidth supported by a band corresponding to the second carrier, and the second carrier is any carrier in the plurality of carriers. In other words, a channel bandwidth of any carrier in the first band combination needs to be less than a maximum value of a channel bandwidth of a band to which the carrier belongs, and channel bandwidths of all carriers in the first band combination need to be equal to the total aggregated bandwidth. Therefore, the network device can determine a channel bandwidth of a carrier based on a channel bandwidth of a band and the total aggregated bandwidth.

With reference to the first aspect, in some implementations of the first aspect, the capability information further includes second information, the second information indicates a maximum channel bandwidth supported by each of the plurality of carriers, and a sum of the maximum channel bandwidths that are supported by the plurality of carriers and that are indicated by the second information is greater than the total aggregated bandwidth supported by the first band combination. Therefore, the network device can determine, based on the first information and the second information, more possible combinations of channel bandwidths supported by carriers in the first band combination.

With reference to the first aspect, in some implementations of the first aspect, a channel bandwidth supported by a third carrier is less than or equal to a maximum channel bandwidth of the third carrier that is indicated by the second information, the third carrier belongs to the plurality of carriers, the plurality of carriers are all the carriers in all the bands included in the first band combination, and the sum of the channel bandwidths supported by the plurality of carriers is less than or equal to the total aggregated bandwidth supported by the first band combination. In other words, a channel bandwidth of one carrier in the first band combination needs to be less than a corresponding maximum channel bandwidth indicated by the second information, and channel bandwidths of all carriers in the first band combination need to be equal to the total aggregated bandwidth.

With reference to the first aspect, in some implementations of the first aspect, the total aggregated bandwidth includes a total uplink aggregated bandwidth and a total downlink aggregated bandwidth. A downlink channel bandwidth supported by the first carrier is less than or equal to a maximum value of a downlink channel bandwidth supported by the first band, and a sum of downlink channel bandwidths supported by the plurality of carriers is less than or equal to a total downlink aggregated bandwidth supported by the first band combination; and/or an uplink channel bandwidth supported by the first carrier is less than or equal to a maximum value of an uplink channel bandwidth supported by the first band, and a sum of uplink channel bandwidths supported by the plurality of carriers is less than or equal to a total uplink aggregated bandwidth supported by the first band combination. In other words, the total aggregated bandwidth specifically indicates a total aggregated bandwidth corresponding to uplink carriers in the first band combination, and/or the total aggregated bandwidth specifically indicates a total aggregated bandwidth corresponding to downlink carriers in the first band combination.

According to a second aspect, a communication method is provided. The method includes: receiving a capability enquiry request; and sending capability information, where the capability information includes third information, the third information indicates at least one group of total aggregated bandwidth capabilities supported by a first band combination, and each group of total aggregated bandwidths in the at least one group of total aggregated bandwidths includes a first total aggregated bandwidth and a second total aggregated bandwidth. The first total aggregated bandwidth indicates a total aggregated bandwidth of carriers in a time division duplex band in the first band combination, and the second total aggregated bandwidth indicates a total aggregated bandwidth of carriers in a frequency division duplex band in the first band combination; and/or the first total aggregated bandwidth indicates a total aggregated bandwidth of carriers in a band with a frequency within a first frequency range, and the second total aggregated bandwidth indicates a total aggregated bandwidth of carriers in a band with a frequency within a second frequency range, where the first frequency range does not overlap the second frequency range. In other words, a terminal device is allowed to report different values through combination in different duplex modes and/or frequency ranges for a same band combination, thereby implementing high flexibility in reporting a bandwidth capability by the terminal device.

With reference to the second aspect, in some implementations of the second aspect, the capability information further includes fourth information, the fourth information includes a feature set combination, and there is a correspondence between the fourth information and the feature set combination.

With reference to the second aspect, in some implementations of the second aspect, the fourth information includes at least one group of feature set combinations, and the at least one group of total aggregated bandwidths indicated by the third information is in one-to-one correspondence with the at least one group of feature set combinations indicated by the fourth information. The at least one group of total aggregated bandwidths and the at least one group of feature set combinations may be separately arranged in sequence. When one group of total aggregated bandwidths corresponds to a plurality of groups of feature set combinations, the terminal device may report the group of total aggregated bandwidths a plurality of times in the capability information, to ensure a correspondence between each group of total aggregated bandwidths and a feature set combination.

According to a third aspect, a communication method is provided, including: receiving a capability enquiry request; and sending capability information, where the capability information includes fifth information, the fifth information indicates a first processing capability, the first processing capability is a maximum value of a processing capability supported by M carriers, the M carriers are carriers in a first band or carriers in a first band combination, and M is a positive integer. The maximum value of the processing capability supported by the M carriers may also be understood as a maximum processing capability supported by a terminal device on the M carriers or a total processing capability supported by the M carriers. Therefore, after receiving the fifth information, a network device can correctly analyze the processing capability supported by the M carriers, thereby implementing flexible capability reporting by the terminal device and ensuring normal communication between the terminal device and the network device.

With reference to the third aspect, in some implementations of the third aspect, a processing capability supported by a first carrier in the M carriers is determined based on at least one of the following: a number of multiple-input multiple-output MIMO layers, a channel bandwidth, a numerology numerology, a subcarrier spacing SCS, a scaling factor, or an overhead, where the first carrier is any one of the M carriers. Therefore, the terminal device reports the supported maximum processing capability, so that the network device can correctly analyze the processing capability supported by the M carriers, thereby implementing normal communication between the terminal device and the network device.

With reference to the third aspect, in some implementations of the third aspect, the processing capability supported by the first carrier is a product of the number of MIMO layers supported by the first carrier, the channel bandwidth supported by the first carrier, and a first coefficient, where the first coefficient is associated with the SCS supported by the first carrier. The first coefficient may also be understood as a first weighting coefficient or a first weighting factor. For example, a subcarrier spacing of 30 kHz is associated with a first coefficient of 1, and 15 kHz is associated with a first coefficient of 2. The first coefficient associated with the subcarrier spacing may be predefined (for example, preset in a protocol), or may be reported by the terminal device to the network device. For example, the capability information sent by the terminal device further includes thirteenth information, the thirteenth information indicates at least one first coefficient supported by the terminal device, and the at least one first coefficient is associated with a subcarrier spacing supported by the terminal device. The terminal device supports a plurality of carriers, and the plurality of carriers may correspond to a same subcarrier spacing or different subcarrier spacings. For a same subcarrier spacing, first coefficients reported by different terminal devices may be the same or different.

With reference to the third aspect, in some implementations of the third aspect, the first processing capability satisfies: $E \geq \sum_{i=1}^{M}\left\{\left[V^{(i)} \cdot W^{(i)} \cdot K^{(i)}\right]\right\}$, where E is the first processing capability, a value of i is 1, 2, ..., or M, $V^{(i)}$ is a number of MIMO layers supported by an $i^{th}$ carrier in the M carriers, $W^{(i)}$ is a channel bandwidth supported by the $i^{th}$ carrier, $K^{(i)}$ is the first coefficient, and $K^{(i)}$ is associated with an SCS supported by the $i^{th}$ carrier. Because numbers of MIMO layers supported by carriers, namely, numbers of data streams simultaneously transmitted in space, are different, a number of MIMO layers is positively correlated with a processing capability of a carrier. In addition, a value of a channel bandwidth supported by each carrier is also positively correlated with a processing capability of the carrier. Therefore, the network device may determine, based on the maximum value of the processing capability that is supported by the M carriers and that is reported by the terminal device, a number of MIMO layers, a channel bandwidth, and the like that are supported by each carrier, thereby implementing normal communication between the terminal device and the network device.

With reference to the third aspect, in some implementations of the third aspect, the M carriers are all carriers in the first band, or the M carriers are all carriers in the first band combination. Therefore, the terminal device may report the fifth information to indicate a maximum processing capability supported by all carriers in the first band, or report the fifth information to indicate a maximum processing capability supported by all carriers in the first band combination, so that after receiving the fifth information, the network device can correctly analyze the processing capability supported by the carriers in the band or the band combination, thereby implementing normal communication between the terminal device and the network device.

With reference to the third aspect, in some implementations of the third aspect, when the M carriers are carriers in the first band combination, the M carriers are carriers in all time division duplex TDD bands in the first band combination, or the M carriers are carriers in all frequency division duplex FDD bands in the first band combination; and/or the at least one carrier is carriers in all bands within a first frequency range in the first band combination. Therefore, the terminal device may report, by using the fifth information, a total processing capability supported by carriers in a TDD band, an FDD band, and/or a band within a specific frequency range, so that after receiving the fifth information, the network device can correctly analyze the processing capability supported by the carriers in the TDD band, the FDD band, and/or the band within the specific frequency range, thereby implementing normal communication between the terminal device and the network device.

With reference to the third aspect, in some implementations of the third aspect, the capability information further includes M pieces of sixth information and M pieces of seventh information that are in one-to-one correspondence with the M carriers, where each piece of sixth information indicates a maximum number of MIMO layers supported by a corresponding carrier, and each piece of seventh information indicates a maximum channel bandwidth supported by the corresponding carrier. Therefore, the network device can correctly parse, based on the reported capability information, numbers of MIMO layers and channel bandwidths that are supported by the M carriers, thereby reducing signaling overheads and implementing normal communication between the terminal device and the network device.

With reference to the third aspect, in some implementations of the third aspect, the capability information further includes M pieces of eighth information, M pieces of ninth information, M pieces of tenth information, and M pieces of eleventh information that are in one-to-one correspondence with the M carriers, where each piece of eighth information indicates a first MIMO layer number capability supported by a corresponding carrier, each piece of ninth information indicates a second MIMO layer number capability supported by the corresponding carrier, each piece of tenth information indicates a first bandwidth capability supported by the corresponding carrier, and each piece of eleventh information indicates a second bandwidth capability supported by the corresponding carrier. The M pieces of eighth information and the M pieces of tenth information are used by a first-type base station to determine the number of MIMO layers and the channel bandwidth that are supported by the first carrier, and the first carrier is any one of the M carriers. The fifth information, the ninth information, and the eleventh information are used by a second-type base station to determine the number of MIMO layers and the channel bandwidth that are supported by the first carrier.

The first-type base station may also be understood as an old base station, or a base station that cannot correctly decode the fifth information and/or cannot decode BCS#4 or BCS#5. The second-type base station may also be understood as a new base station, or a base station that can decode the fifth information and/or can decode BCS#4 or BCS#5. At least one group {first MIMO layer number capability and first bandwidth capability} supported by each of the M carriers may be specifically reported by the terminal device in the capability information by enumerating a plurality of FeatureSet combinations (a plurality of rows of FeatureSets), so that a number of MIMO layers and a channel bandwidth that are supported by a carrier and that are determined by the first-type base station are prevented from exceeding a capability that can be supported by the terminal device. The maximum number of MIMO layers and the maximum channel bandwidth that are supported by each carrier may be reported in the second MIMO layer number capability and the second bandwidth capability by using only one feature set combination (one row of feature sets). Because the second-type base station can parse the first processing capability, the second-type base station may ignore the eighth information and the tenth information that are reported in the capability information, and determine, based on the ninth information and the eleventh information, numbers of MIMO layers and channel bandwidths that are supported by the M carriers, thereby ensuring compatibility between the terminal device and an old base station.

With reference to the third aspect, in some implementations of the third aspect, the maximum value of the processing capability supported by the M carriers includes a maximum value of an uplink processing capability supported by the M carriers and/or a maximum value of a downlink processing capability supported by the M carriers. Therefore, after receiving twelfth information, the network device can correctly analyze a maximum data rate supported by an uplink carrier and/or a maximum data rate supported by a downlink carrier, thereby implementing normal communication between the terminal device and the network device.

According to a fourth aspect, a communication method is provided, including: receiving a capability enquiry request; and sending capability information, where the capability information includes twelfth information, the twelfth information indicates a maximum data rate supported by M carriers, the M carriers are carriers in a first band or carriers in a first band combination, and M is a positive integer. Therefore, a terminal device reports the maximum data rate supported by the M carriers, so that after receiving the twelfth information, a network device can correctly analyze the data rate supported by the M carriers, thereby implementing flexible capability reporting by the terminal device and ensuring normal communication between the terminal device and the network device.

With reference to the fourth aspect, in some implementations of the fourth aspect, the maximum data rate satisfies: $S \geq \sum_{j=1}^{M} [v_{layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot (1 - OH^{(j)})]$, where S is the maximum data rate, a value of J is 1, 2, ..., or M, $v_{layers}^{(j)}$ is a number of MIMO layers of a $j^{th}$ carrier in the M carriers, $Q_m^{(j)}$ is a

modulation order of the jth carrier, f(j) is a scaling factor of the jth carrier, R$_{max}$ is a maximum code rate, $N_{PRB}^{BW(j)}$ is a maximum number of resource blocks included in the jth carrier when a bandwidth is a channel bandwidth BW(j) in a numerology μ, $T_s^\mu$ is average orthogonal frequency division multiplexing OFDM symbol duration of the jth carrier in the numerology μ, and OH(j) is an overhead corresponding to the jth carrier.

With reference to the fourth aspect, in some implementations of the fourth aspect, the M carriers are all carriers in the first band, or the M carriers are all carriers in the first band combination. Therefore, the terminal device may report the twelfth information to indicate a maximum data rate supported by all carriers in the first band, or report the twelfth information to indicate a maximum data rate supported by all carriers in the first band combination, so that after receiving the twelfth information, the network device can correctly analyze the maximum data rate supported by the carriers in the band or the band combination, thereby implementing normal communication between the terminal device and the network device.

With reference to the fourth aspect, in some implementations of the fourth aspect, when the M carriers are carriers in the first band combination, the M carriers are carriers in all time division duplex TDD bands in the first band combination, or the M carriers are carriers in all frequency division duplex FDD bands in the first band combination; and/or the at least one carrier is carriers in all bands within a first frequency range in the first band combination. Therefore, the terminal device may report, by using the twelfth information, a maximum data rate supported by carriers in a TDD band, an FDD band, and/or a band within a specific frequency range, so that after receiving the twelfth information, the network device can correctly analyze the maximum data rate supported by the carriers in the TDD band, the FDD band, and/or the band within the specific frequency range, thereby implementing normal communication between the terminal device and the network device.

With reference to the fourth aspect, in some implementations of the fourth aspect, the maximum data rate supported by the M carriers includes a maximum uplink data rate supported by the M carriers and/or a maximum downlink data rate supported by the M carriers. Therefore, the terminal device may report, by using the twelfth information, a maximum data rate supported by an uplink carrier and/or a maximum data rate supported by a downlink carrier, so that after receiving the twelfth information, the network device can correctly analyze the maximum data rate supported by the uplink carrier and/or the maximum data rate supported by the downlink carrier, thereby implementing normal communication between the terminal device and the network device.

According to a fifth aspect, a communication method is provided. The method includes: sending a capability enquiry request; and receiving capability information, where the capability information includes first information, the first information indicates a total aggregated bandwidth supported by a first band combination, the first band combination includes at least one band, and each of the at least one band includes at least one carrier. A channel bandwidth supported by a first carrier is associated with the first information, the first carrier is used for communication between a terminal device and a network device, and the first carrier belongs to a first band in the first band combination.

The total aggregated bandwidth may also be a total bandwidth or a maximum aggregated bandwidth (maximum aggregated bandwidth).

In some implementations, that the channel bandwidth supported by the first carrier is associated with the first information may also be replaced with or understood as that the network device determines, based on the first information, the channel bandwidth supported by the first carrier, or the first information is used by the network device to determine the channel bandwidth supported by the first carrier. The first carrier may be replaced with a first cell.

Therefore, when receiving the first information indicating a total aggregated bandwidth of a band combination, the network device may determine, based on an association between a total aggregated bandwidth and a channel bandwidth of a carrier, a channel bandwidth supported by a carrier included in the band combination, and allocate, based on a channel bandwidth of a carrier that is supported by the terminal device, a frequency domain resource to the terminal device on the carrier, thereby implementing normal communication between the terminal device and the network device.

With reference to the fifth aspect, in some implementations of the fifth aspect, the channel bandwidth supported by the first carrier is less than or equal to a maximum value of a channel bandwidth supported by the first band, and a sum of channel bandwidths supported by a plurality of carriers is less than or equal to the total aggregated bandwidth supported by the first band combination, where the plurality of carriers are all carriers in all bands included in the first band combination. In other words, a channel bandwidth of one carrier in the first band combination needs to be less than a maximum value of a channel bandwidth of a band to which the carrier belongs, and channel bandwidths of all carriers in the first band combination need to be equal to the total aggregated bandwidth. Therefore, the network device can determine a channel bandwidth of a carrier based on a channel bandwidth of a band and the total aggregated bandwidth.

With reference to the fifth aspect, in some implementations of the fifth aspect, a channel bandwidth supported by a second carrier is less than or equal to a maximum value of a channel bandwidth supported by a band corresponding to the second carrier, and the second carrier is any carrier in the plurality of carriers. In other words, a channel bandwidth of any carrier in the first band combination needs to be less than a maximum value of a channel bandwidth of a band to which the carrier belongs, and channel bandwidths of all carriers in the first band combination need to be equal to the total aggregated bandwidth. Therefore, the network device can determine a channel bandwidth of a carrier based on a channel bandwidth of a band and the total aggregated bandwidth.

With reference to the fifth aspect, in some implementations of the fifth aspect, the capability information further includes second information, the second information indicates a maximum channel bandwidth supported by each of the plurality of carriers, and a sum of the maximum channel bandwidths that are supported by the plurality of carriers and that are indicated by the second information is greater than the total aggregated bandwidth supported by the first band combination. Therefore, the network device can determine, based on the first information and the second information, more possible combinations of channel bandwidths supported by carriers in the first band combination.

With reference to the fifth aspect, in some implementations of the fifth aspect, a channel bandwidth supported by a third carrier is less than or equal to a maximum channel bandwidth of the third carrier that is indicated by the third information, the third carrier belongs to the plurality of carriers, the plurality of carriers are all the carriers in all the bands included in the first band combination, and the sum of the channel bandwidths supported by the plurality of carriers is less than or equal to the total aggregated bandwidth supported by the first band combination. In other words, a channel bandwidth of one carrier in the first band combination needs to be less than a corresponding maximum channel bandwidth indicated by the second information, and channel bandwidths of all carriers in the first band combination need to be equal to the total aggregated bandwidth.

With reference to the fifth aspect, in some implementations of the fifth aspect, the total aggregated bandwidth includes a total uplink aggregated bandwidth and a total downlink aggregated bandwidth. A downlink channel bandwidth supported by the first carrier is less than or equal to a maximum value of a downlink channel bandwidth supported by the first band, and a sum of downlink channel bandwidths supported by the plurality of carriers is less than or equal to a total downlink aggregated bandwidth supported by the first band combination; and/or an uplink channel bandwidth supported by the first carrier is less than or equal to a maximum value of an uplink channel bandwidth supported by the first band, and a sum of uplink channel bandwidths supported by the plurality of carriers is less than or equal to a total uplink aggregated bandwidth supported by the first band combination. In other words, the total aggregated bandwidth specifically indicates a total aggregated bandwidth corresponding to uplink carriers in the first band combination, and/or the total aggregated bandwidth specifically indicates a total aggregated bandwidth corresponding to downlink carriers in the first band combination.

According to a sixth aspect, a communication method is provided. The method includes: receiving a capability enquiry request; and sending capability information, where the capability information includes third information, the third information indicates at least one group of total aggregated bandwidth capabilities supported by a first band combination, and each group of total aggregated bandwidths in the at least one group of total aggregated bandwidths includes a first total aggregated bandwidth and a second total aggregated bandwidth. The first total aggregated bandwidth indicates a total aggregated bandwidth of carriers in a time division duplex band in the first band combination, and the second total aggregated bandwidth indicates a total aggregated bandwidth of carriers in a frequency division duplex band in the first band combination; and/or the first total aggregated bandwidth indicates a total aggregated bandwidth of carriers in a band with a frequency within a first frequency range, and the second total aggregated bandwidth indicates a total aggregated bandwidth of carriers in a band with a frequency within a second frequency range, where the first frequency range does not overlap the second frequency range.

With reference to the sixth aspect, in some implementations of the sixth aspect, the capability information further includes fourth information, the fourth information includes a feature set combination, and there is a correspondence between the fourth information and the feature set combination. The at least one group of total aggregated bandwidths and the at least one group of feature set combinations may be separately arranged in sequence. When one group of total aggregated bandwidths corresponds to a plurality of groups of feature set combinations, a terminal device may report the group of total aggregated bandwidths a plurality of times in the capability information, to ensure a correspondence between each group of total aggregated bandwidths and a feature set combination. The at least one group of total aggregated bandwidths and the at least one group of feature set combinations may be separately arranged in sequence. When one group of total aggregated bandwidths corresponds to a plurality of groups of feature set combinations, a terminal device may report the group of total aggregated bandwidths a plurality of times in the capability information, to ensure a correspondence between each group of total aggregated bandwidths and a feature set combination.

With reference to the sixth aspect, in some implementations of the sixth aspect, the fourth information includes at least one group of feature set combinations, and the at least one group of total aggregated bandwidths indicated by the fourth information is in one-to-one correspondence with the at least one group of feature set combinations.

According to a seventh aspect, a communication method is provided. The method includes: sending a capability enquiry request; and receiving capability information, where the capability information includes fifth information, the fifth information indicates a first processing capability, the first processing capability is a maximum value of a processing capability supported by M carriers, the M carriers are carriers in a first band or carriers in a first band combination, and M is a positive integer. The maximum value of the processing capability supported by the M carriers may also be understood as a maximum processing capability supported by a terminal device on the M carriers or a total processing capability supported by the M carriers. Therefore, after receiving the fifth information, a network device can correctly analyze the processing capability supported by the M carriers, thereby implementing flexible capability reporting by the terminal device and ensuring normal communication between the terminal device and the network device.

With reference to the seventh aspect, in some implementations of the seventh aspect, a processing capability supported by a first carrier in the M carriers is determined based on at least one of the following: a number of MIMO layers, a channel bandwidth, a numerology, an SCS, a scaling factor, or an overhead, where the first carrier is any one of the M carriers. Therefore, the terminal device reports the supported maximum processing capability, so that the network device can correctly analyze the processing capability supported by the M carriers, thereby implementing normal communication between the terminal device and the network device.

With reference to the seventh aspect, in some implementations of the seventh aspect, the processing capability supported by the first carrier is a product of the number of MIMO layers supported by the first carrier, the channel bandwidth supported by the first carrier, and a first coefficient, where the first coefficient is associated with the SCS supported by the first carrier. The first coefficient may also be understood as a first weighting coefficient or a first weighting factor. For example, a subcarrier spacing of 30 kHz is associated with a first coefficient of 1, and 15 kHz is associated with a first coefficient of 2. The first coefficient associated with the subcarrier spacing may be predefined (for example, preset in a protocol), or may be reported by the terminal device to the network device. For example, the capability information sent by the terminal device further includes thirteenth information, the thirteenth information indicates at least one first coefficient supported by the terminal device, and the at least one first coefficient is associated with a subcarrier spacing supported by the terminal device. The terminal device supports a plurality of carriers, and the plurality of carriers may correspond to a same subcarrier spacing or different subcarrier spacings. For a same subcarrier spacing, first coefficients reported by different terminal devices may be the same or different.

With reference to the seventh aspect, in some implementations of the seventh aspect, the first processing capability satisfies: $E \geq \sum_{i=1}^{M}\left\{\left[V^{(i)} \cdot W^{(i)} \cdot K^{(i)}\right]\right\}$, where E is the first processing capability, a value of i is 1, 2, ..., or M, $V^{(i)}$ is a number of MIMO layers supported by an $i^{th}$ carrier in the M carriers, $W^{(i)}$ is a channel bandwidth supported by the $i^{th}$ carrier, $K^{(i)}$ is the first coefficient, and $K^{(i)}$ is associated with an SCS supported by the $i^{th}$ carrier. Because numbers of MIMO layers supported by carriers, namely, numbers of data streams simultaneously transmitted in space, are different, a number of MIMO layers is positively correlated with a processing capability of a carrier. In addition, a value of a channel bandwidth supported by each carrier is also positively correlated with a processing capability of the carrier. Therefore, the network device may determine, based on the maximum value of the processing capability that is supported by the M carriers and that is reported by the terminal device, a number of MIMO layers, a channel bandwidth, and the like that are supported by each carrier, thereby implementing normal communication between the terminal device and the network device.

With reference to the seventh aspect, in some implementations of the seventh aspect, the M carriers are all carriers in the first band, or the M carriers are all carriers in the first band combination. Therefore, the terminal device may report the fifth information to indicate a maximum processing capability supported by all carriers in the first band, or report the fifth information to indicate a maximum processing capability supported by all carriers in the first band combination, so that after receiving the fifth information, the network device can correctly analyze the processing capability supported by the carriers in the band or the band combination, thereby implementing normal communication between the terminal device and the network device.

With reference to the seventh aspect, in some implementations of the seventh aspect, when the M carriers are carriers in the first band combination, the M carriers are carriers in all TDD bands in the first band combination, or the M carriers are carriers in all FDD bands in the first band combination; and/or the at least one carrier is carriers in all bands within a first frequency range in the first band combination. Therefore, the terminal device may report, by using the fifth information, a total processing capability supported by carriers in a TDD band, an FDD band, and/or a band within a specific frequency range, so that after receiving the fifth information, the network device can correctly analyze the processing capability supported by the carriers in the TDD band, the FDD band, and/or the band within the specific frequency range, thereby implementing normal communication between the terminal device and the network device.

With reference to the seventh aspect, in some implementations of the seventh aspect, the capability information further includes M pieces of sixth information and M pieces of seventh information that are in one-to-one correspondence with the M carriers, where each piece of sixth information indicates a maximum number of MIMO layers supported by a corresponding carrier, and each piece of seventh information indicates a maximum channel bandwidth supported by the corresponding carrier. The method further includes: determining, based on the fifth information, the sixth information, and the seventh information, the number of MIMO layers and the channel bandwidth that are supported by the first carrier. Therefore, the network device can correctly parse, based on the reported capability information, the numbers of MIMO layers and the channel bandwidths that are supported by the M carriers, thereby reducing signaling overheads and implementing normal communication between the terminal device and the network device.

With reference to the seventh aspect, in some implementations of the seventh aspect, the capability information further includes M pieces of eighth information, M pieces of ninth information, M pieces of tenth information, and M pieces of eleventh information that are in one-to-one correspondence with the M carriers, where each piece of eighth information indicates a first MIMO layer number capability supported by a corresponding carrier, each piece of ninth information indicates a second MIMO layer number capability supported by the corresponding carrier, each piece of tenth information indicates a first bandwidth capability supported by the corresponding carrier, and each piece of eleventh information indicates a second bandwidth capability supported by the corresponding carrier. When the method is performed by a first-type base station, the method further includes: determining, based on the M pieces of eighth information and the M pieces of tenth information, the number of MIMO layers and the channel bandwidth that are supported by the first carrier, where the first carrier is any one of the M carriers. When the method is performed by a second-type base station, the method further includes: determining, based on the fifth information, the M pieces of ninth information, and the M pieces of eleventh information, the number of MIMO layers and the channel bandwidth that are supported by the first carrier.

The first-type base station may also be understood as an old base station, or a base station that cannot correctly decode the fifth information and/or cannot decode BCS#4 or BCS#5. The second-type base station may also be understood as a new base station, or a base station that can decode the fifth information and/or can decode BCS#4 or BCS#5. At least one group {first MIMO layer number capability and first bandwidth capability} supported by each of the M carriers may be specifically reported by the terminal device in the capability information by enumerating a plurality of FeatureSet combinations (a plurality of rows of FeatureSets), so that a number of MIMO layers and a channel bandwidth that are supported by a carrier and that are determined by the first-type base station are prevented from exceeding a capability that can be supported by the terminal device. The maximum number of MIMO layers and the maximum channel bandwidth that are supported by each carrier may be reported in the second MIMO layer number capability and the second bandwidth capability by using only one feature set combination (one row of feature sets). Because the second-type base station can parse the first processing capability, the second-type base station may ignore the eighth information and the tenth information that are reported in the capability information, and determine, based on the ninth information and the eleventh information, numbers of MIMO layers and channel bandwidths that are supported by the M carriers, thereby ensuring compatibility between the terminal device and an old base station.

With reference to the seventh aspect, in some implementations of the seventh aspect, the maximum value of the processing capability supported by the M carriers includes a maximum value of an uplink processing capability supported by the M carriers and/or a maximum value of a downlink processing capability supported by the M carriers. Therefore, after receiving twelfth information, the network device can correctly analyze a maximum data rate supported by an uplink carrier and/or a maximum data rate supported by a downlink carrier, thereby implementing normal communication between the terminal device and the network device.

According to an eighth aspect, a communication method is provided. The method includes: sending a capability enquiry request; and receiving capability information, where the capability information includes twelfth information, the twelfth information indicates a maximum data rate supported by M carriers, the M carriers are carriers in a first band or carriers in a first band combination, and M is a positive integer. Therefore, a terminal device reports the maximum data rate supported by the M carriers, so that after receiving the twelfth information, a network device can correctly analyze the data rate supported by the M carriers, thereby implementing flexible capability reporting by the terminal device and ensuring normal communication between the terminal device and the network device.

With reference to the eighth aspect, in some implementations of the eighth aspect, the maximum data rate satisfies:
$$S \geq 10^{-6} \cdot \sum_{j=1}^{M}\left[v_{layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot \left(1 - OH^{(j)}\right)\right]$$
, where S is the maximum data rate, a value of J is 1, 2, ..., or M, $v_{layers}^{(j)}$ is a number of MIMO layers of a $j^{th}$ carrier in the M carriers, $Q_m^{(j)}$ is a modulation order of the $j^{th}$ carrier, $f^{(j)}$ is a scaling factor of the $j^{th}$ carrier, $R_{max}$ is a maximum code rate, $N_{PRB}^{BW(j)}$ is a maximum number of resource blocks included in the $j^{th}$ carrier when a bandwidth is a channel bandwidth BW(j) in a numerology $\mu$, $T_s^{\mu}$ is average orthogonal frequency division multiplexing OFDM symbol duration of the $j^{th}$ carrier in the numerology $\mu$, and $OH^{(j)}$ is an overhead corresponding to the $j^{th}$ carrier.

With reference to the eighth aspect, in some implementations of the eighth aspect, the M carriers are all carriers in the first band, or the M carriers are all carriers in the first band combination. Therefore, the terminal device may report the twelfth information to indicate a maximum data rate supported by all carriers in the first band, or report the twelfth information to indicate a maximum data rate supported by all carriers in the first band combination, so that after receiving the twelfth information, the network device can correctly analyze the maximum data rate supported by the carriers in the band or the band combination, thereby implementing normal communication between the terminal device and the network device.

With reference to the eighth aspect, in some implementations of the eighth aspect, when the M carriers are carriers in the first band combination, the M carriers are carriers in all time division duplex TDD bands in the first band combination, or the M carriers are carriers in all frequency division duplex FDD bands in the first band combination; and/or the at least one carrier is carriers in all bands within a first frequency range in the first band combination.

With reference to the eighth aspect, in some implementations of the eighth aspect, the maximum data rate supported by the M carriers includes a maximum uplink data rate supported by the M carriers and/or a maximum downlink data rate supported by the M carriers. Therefore, the terminal device may report, by using the twelfth information, a maximum data rate supported by an uplink carrier and/or a maximum data rate supported by a downlink carrier, so that after receiving the twelfth information, the network device can correctly analyze the maximum data rate supported by the uplink carrier and/or the maximum data rate supported by the downlink carrier, thereby implementing normal communication between the terminal device and the network device.

According to a ninth aspect, a communication apparatus is provided, including a transceiver module and a processing module. Some or all steps of the method according to the first aspect and any possible implementation of the first aspect, the second aspect and any possible implementation of the second aspect, the third aspect and any possible implementation of the third aspect, or the fourth aspect and any possible implementation of the fourth aspect are performed.

According to a tenth aspect, a communication apparatus is provided, including a transceiver module and a processing module. Some or all steps of the method according to the fifth aspect and any possible implementation of the fifth aspect, the sixth aspect and any possible implementation of the sixth aspect, the seventh aspect and any possible implementation of the seventh aspect, or the eighth aspect and any possible implementation of the eighth aspect are performed.

According to an eleventh aspect, a computer-readable storage medium is provided. The storage medium stores a computer program or instructions. When the computer program or the instructions are executed by a processor, some or all steps of the method according to the first aspect and any possible implementation of the first aspect, the second aspect and any possible implementation of the second aspect, the third aspect and any possible implementation of the third aspect, the fourth aspect and any possible implementation of the fourth aspect, the fifth aspect and any possible implementation of the fifth aspect, the sixth aspect and any possible implementation of the sixth aspect, the seventh aspect and any possible implementation of the seventh aspect, or the eighth aspect and any possible implementation of the eighth aspect are performed.

According to a twelfth aspect, a computer product is provided. When the computer program product is run, some or all steps of the method according to the first aspect and any possible implementation of the first aspect, the second aspect and any possible implementation of the second aspect, the third aspect and any possible implementation of the third aspect, the fourth aspect and any possible implementation of the fourth aspect, the fifth aspect and any possible implementation of the fifth aspect, the sixth aspect and any possible implementation of the sixth aspect, the seventh aspect and any possible implementation of the seventh aspect, or the eighth aspect and any possible implementation of the eighth aspect are performed.

According to a thirteenth aspect, a communication system is provided, including the first communication apparatus according to the ninth aspect and the possible implementations of the foregoing aspects and the second communication apparatus according to the tenth aspect and the possible implementations of the foregoing aspects.

BRIEF DESCRIPTION OF DRAWINGS

FIG. 1 is a diagram of an architecture of a communication system according to an embodiment of this application;
FIG. 2 is a diagram of a structure of carrier aggregation corresponding to a band combination according to an embodiment of this application;
FIG. 3 is a diagram of a feature set combination according to an embodiment of this application;
FIG. 4 is a diagram of a communication method according to an embodiment of this application;
FIG. 5 is a diagram of another communication method according to an embodiment of this application;
FIG. 6 is a diagram of another communication method according to an embodiment of this application;
FIG. 7 is a diagram of another communication method according to an embodiment of this application;
FIG. 8 is a diagram of a communication method according to an embodiment of this application;
FIG. 9 is a diagram of another communication apparatus according to an embodiment of this application;
FIG. 10 is a diagram of another communication apparatus according to an embodiment of this application; and
FIG. 11 is a diagram of a communication system according to an embodiment of this application.

DESCRIPTION OF EMBODIMENTS

The following describes technical solutions of this application with reference to accompanying drawings

The technical solutions in embodiments of this application may be applied to various communication systems, for example, a long term evolution (long term evolution, LTE) system, a long term evolution advanced pro (long term evolution advanced pro, LTE-A pro) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a new radio (new radio, NR) communication system, and a future communication system.

In embodiments of this application, a terminal device may be user equipment, an access terminal, a subscriber unit, a subscriber station, a mobile station, a remote station, a remote terminal, a mobile device, a user terminal, a terminal, a wireless communication device, a user agent, or a user apparatus. The terminal device may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal device in a future 5G network, a terminal device in a future evolved public land mobile network (public land mobile network, PLMN), or the like. This is not limited in this application.

In embodiments of this application, a network device may be any device having a wireless transceiver function. The network device includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (a home evolved NodeB or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB or a transmission point (TRP or TP) in a 5th generation (fifth generation, 5G) system, or one antenna panel or one group of antenna panels (including a plurality of antenna panels) of a base station in a 5G system, or may be a network node that constitutes a gNB or a transmission point, for example, a baseband unit (building baseband unit, BBU) or a distributed unit (distributed unit, DU).

In some deployments, the gNB may include a central unit (central unit, CU) and a distributed unit (distributed unit, DU). The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a media access control (media access control, MAC) layer, and a physical (physical, PHY) layer. The AAU implements some physical layer processing functions, radio frequency processing, and a function related to an active antenna. Information at the RRC layer is eventually converted into information at the PHY layer, or is converted from information at the PHY layer. Therefore, in this architecture, higher layer signaling such as RRC layer signaling may also be considered as being sent by the DU or sent by the DU and the AAU.

It may be understood that the network device may be a device including one or more of the CU, the DU, and the AAU. In addition, the CU may be classified into a network device in an access network (radio access network, RAN), or the CU may be classified into a network device in a core network (core network, CN). This is not limited in this application.

It should be understood that this application may be applied to a standalone 5G or LTE system, or may be applied to a non-standalone 5G or LTE system, for example, a DC scenario, including a dual connectivity (E-UTRA-NR dual connectivity, EN-DC) scenario and a carrier aggregation (carrier aggregation, CA) scenario.

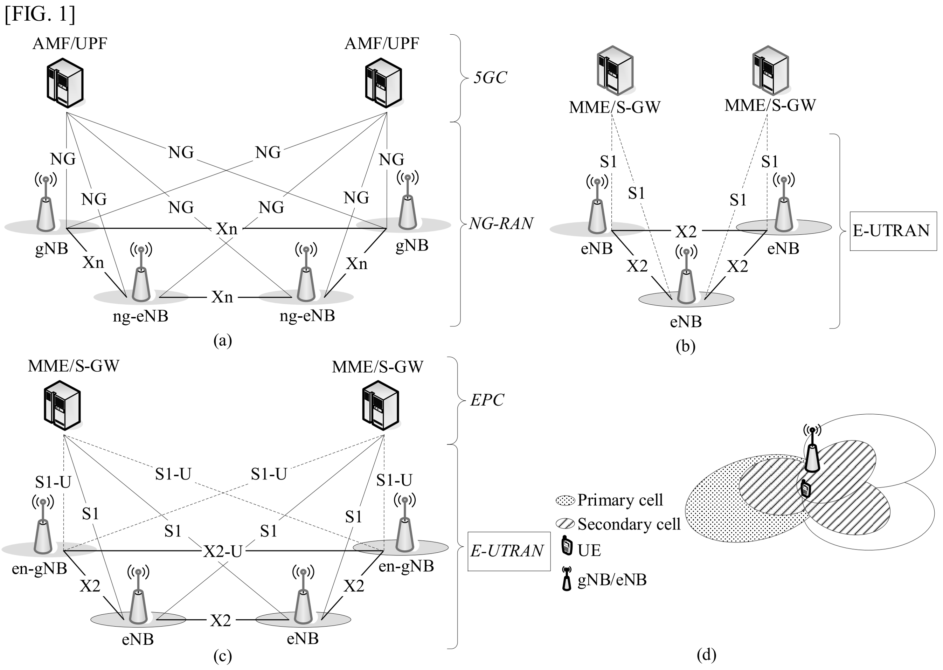

FIG. 1 is a diagram of an architecture of a communication system according to an embodiment of this application. The wireless communication system may include at least one network device. The network device communicates with one or more terminal devices by using a wireless communication technology.

In some implementations, as shown in (a) in FIG. 1, the structure may be a 5G system architecture. A gNB is a node that provides NR user plane and control plane protocol terminations for UE, and is connected to a 5GC (5G core network) through an NG interface. An ng-eNB is a node that provides evolved universal terrestrial radio access network (evolved universal terrestrial radio access network, E-UTRA) user plane and control plane protocol terminations for UE, and is connected to the 5GC through an NG interface. An access and mobility management function (access and mobility management function, AMF) is responsible for NAS message ciphering and integrity protection, registration, access, mobility, authentication, transparent SMS message transmission, and the like, and may be compared to an MME entity in 4G. A user plane function (user plane function, UPF) serves as an interface to a data network, and completes user plane data forwarding, session/flow level-based charging statistics collection, bandwidth throttling, and the like, namely, packet routing and forwarding, quality of service (quality of service, QoS) handling for user plane data, and the like. gNBs are connected to each other through an Xn interface.

In some implementations, as shown in (b) in FIG. 1, the architecture may be an LTE system architecture. Functions of a mobility management entity (mobility management entity, MME) are sending a paging message to a corresponding eNB, idle state mobility control, non-access stratum signaling ciphering and integrity protection, and the like. A serving gateway (serving gateway, SGW) supports user plane data exchange for UE mobility, and the like. An S1 interface is located between an eNB and an MME/SGW to connect the eNB to the MME, and mainly completes radio access bearer control, interface-dedicated operation and maintenance, and the like of the S1 interface. eNBs are connected to each other through an X2 interface to form a mesh network.

In some implementations, as shown in (c) in FIG. 1, the architecture is applicable to an EN-DC scenario. EN-DC is anchoring a 5G NR control plane to 4G LTE, and 5G NR is used to carry a user plane service. A control plane is a channel for sending and scheduling resource-required signaling, and a user plane is a channel for transmitting user data. In NSA networking, a 5G base station is attached to an existing 4G core network.

An LTE base station eNB functions as an MN, and an NR base station gNB functions as an SN. There is an S1 interface between an LTE eNB and an evolved packet core (evolved packet core, EPC) of an LTE system, that is, there is at least a control plane connection (S1-controlplane, S1-C), and there may also be a user plane connection (S1-userplane, S1-U). There is an S1-U interface between an NR gNB and an EPC, that is, there may be only a user plane connection.

In some implementations, as shown in (d) in FIG. 1, the architecture is applicable to a CA scenario. In the CA scenario, cells may be classified into a primary cell and a secondary cell. The primary cell is a cell operating on a primary band. UE performs an initial connection establishment procedure or starts a connection re-establishment procedure in the cell. In a handover procedure, the cell is indicated as a primary cell. The secondary cell is a cell operating on a secondary band. Once an RRC connection is established, the secondary cell may be configured to provide additional radio resources.

For ease of understanding, related concepts in this application are first briefly described.

1. Band combination (band combination, BC)

The band combination is to combine different bands to increase a data transmission rate. The band combination may be implemented according to a carrier aggregation technology.

2. Carrier aggregation (carrier aggregation, CA) technology

The carrier aggregation is to aggregate two or more component carriers (component carrier, CC). A plurality of CCs simultaneously serve a terminal device, to support a larger transmission bandwidth and increase a peak transmission rate. The carrier aggregation supports aggregation between different CCs.

A carrier may be a TDD CC or an FDD CC. Uplink and downlink frequency ranges of the TDD CC are the same, and downlink receiving and uplink sending are performed by using different time domain resources. Uplink and downlink frequency ranges of the FDD CC are different, and downlink receiving and uplink sending are performed by using different frequency resources. The CC may belong to an FR1 band or an FR2 band, in other words, a frequency of the CC may be in a range of 50 MHz to 6000 MHz or a range of 24250 MHz to 52600 MHz.

There are three types of CA:

(1) Intra-band contiguous carrier aggregation: CCs belong to a same band and are contiguous in frequency domain.
(2) Intra-band non-contiguous carrier aggregation: CCs belong to a same band but are non-contiguous in frequency domain.
(3) Inter-band carrier aggregation: CCs belong to different bands. A plurality of CCs are basically non-contiguous in frequency domain because the CCs belong to different bands.

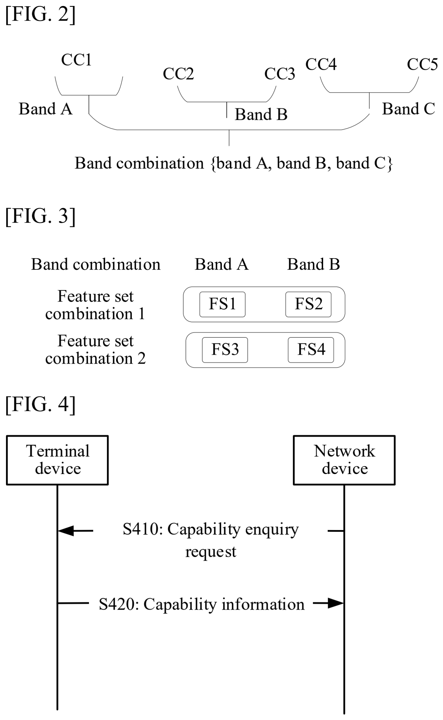

FIG. 2 is a diagram of a structure of carrier aggregation corresponding to a band combination according to an embodiment of this application. As shown in FIG. 2, the band combination includes a band A, a band B, and a band C. The band A includes CC1, the band B includes CC2 and CC3, and the band C includes CC4 and CC5.

In addition, in a dual connectivity (DC, dual connectivity) architecture, carrier aggregation is also supported. In DC, UE is simultaneously connected to cells of two base stations (the base stations herein are logical base stations). A master base station is a master node (MN), and a secondary base station is a secondary node (SN). Both the MN and the SN can independently perform CA. Cells that associate with the MN and that are aggregated in CA form a master cell group (master cell group, MCG), and cells that associate with the SN and that are aggregated in CA form a secondary cell group (secondary cell group, SCG). A PCC in the SCG is referred to as a PSCell.

3. Terminal device (UE) capability

Because different terminal devices use different hardware or software, UE capabilities are different. To better serve UE, a network needs to know UE capabilities. The UE capabilities may be classified into the following different levels based on a hierarchical structure:

(1) Terminal device-level capability: This capability is also referred to as a per UE capability.
(2) Band-level capability: This capability is also referred to as a per band capability. To be specific, a terminal device reports at least one supported band and a capability on each of the at least one band.
(3) Band combination-level capability: This capability is also referred to as a per BC capability. To be specific, a terminal device reports at least one supported band combination and a capability related to each of the at least one band combination. One band combination corresponds to one feature set combination. The feature set combination includes the following two levels of capabilities:

a. Band-level capability in a band combination: This capability is also referred to as a per band per BC capability, that is, a capability on a specific band included in each of at least one band combination. The capability is reported by using a standard feature set (feature set, FS), and is also referred to as a per FS capability. The feature set includes a downlink feature set (FeatureSetDownlink, FSDL) and an uplink feature set (FeatureSetUplink, FSUL).
b. Carrier-level capability: This capability is also referred to as a per CC capability, that is, a capability on a specific carrier included in each of at least one band combination. The capability is reported by using a carrier-level feature set (feature set per CC, FSPC), and is also referred to as an FSPC capability. The carrier feature set also includes a downlink carrier feature set (FeatureSetDownlinkPerCC) and an uplink carrier feature set (FeatureSetUplink-PerCC).

4. Bandwidth capability

A UE capability includes a bandwidth-related capability, and is used by a network device to configure a bandwidth for communication with a terminal device. Related fields are specifically as follows:

4.1 Channel bandwidth (channelBWs) capability

Band-level (per band) capability. This field indicates a channel bandwidth supported by the terminal device on each band, and a DL channel bandwidth capability and a UL channel bandwidth capability may be separately reported. The channel bandwidth capability is usually related to a radio frequency capability of the band. Therefore, regardless of a band combination, channel bandwidth capabilities are the same for a same band. The capability may be represented in a form of a bitmap (bitmap). For example, in a bitmap with a length of 10 bits, starting from a first bit from the left, the bits respectively correspond to bandwidths [5, 10, 15, 20, 25, 30, 40, 50, 60, 80] MHz. If a corresponding bit is set to 1, it indicates that the UE supports the bandwidth. If a corresponding bit is set to 0, it indicates that the UE does not support the bandwidth.

For a specific correspondence between a bitmap and a bandwidth value, refer to a protocol. A band n41 specified in the protocol is used as an example. As shown in Table 1, in different subcarrier spacings (subcarrier spacing, SCS), channel bandwidth values supported on the band n41 may be reported by using channel bandwidth capabilities.

Table 1

| Band | SCS (kHz) | Channel bandwidth (MHz) | | | | | | | | | | | | | |
|------|-----------|-----------|----|----|----|----|----|----|----|----|----|----|----|----|-----|
|      |           | $5^{4,11}$ | 10 | 15 | 20 | 25 | 30 | 35 | 40 | 45 | 50 | 60 | 70 | 80 | 90 | 100 |
| n41  | 15        |           | 10 | 15 | 20 | 25 | 30 | 35 | 40 | 45 | 50 |    |    |    |    |     |
|      | 30        |           | 10 | 15 | 20 | 25 | 30 | 35 | 40 | 45 | 50 | 60 | 70 | 80 | 90 | 100 |
|      | 60        |           | 10 | 15 | 20 | 25 | 30 | 35 | 40 | 45 | 50 | 60 | 70 | 80 | 90 | 100 |

4.2 Maximum carrier bandwidth capability

Carrier-level (per CC) channel bandwidth capability. This field indicates a maximum bandwidth supported by the terminal device on a single carrier. For example, the maximum bandwidth capability of the carrier may be reported to the network device by using a supportedBandwidth/supportedBandwidth-v1710 field. A downlink (DL) channel bandwidth capability and an uplink (UL) channel bandwidth capability of the carrier may be separately reported. For example, the downlink channel bandwidth capability of the carrier is reported by using a supportedBandwidthDL/supportedBandwidthDL-v1710 field, and the uplink channel bandwidth capability of the carrier is reported by using supportedBandwidthUL/supportedBandwidthUL-v1710.

The BC shown in FIG. 2 is used as an example. The BC includes the band A, the band B, and the band C, and the bands specifically include CC1, CC2, CC3, CC4, and CC5. The terminal device may report, by using this field, that a maximum bandwidth of CC1 is 100 MHz, a maximum bandwidth of CC2 is 40 MHz, a maximum bandwidth of CC3 is 40 MHz, a maximum bandwidth of CC4 is 80 MHz, and a maximum bandwidth of CC5 is 60 MHz.

Because this capability is reported at a carrier level, in a same band combination, maximum bandwidths respectively corresponding to a plurality of CCs included in a same band may be the same or different; in a same BC, maximum bandwidths corresponding to CCs included in different bands may be the same or different; and for a same band, maximum bandwidth values of carriers in different carrier combinations may be the same or different.

4.3 Carrier aggregation bandwidth class (ca-BandwidthClass) capability

Band-level capability in a band combination (per band per BC). This field indicates a number of contiguous carriers aggregated on a band and an aggregated carrier bandwidth. An FR1 band is used as an example. Table 2 shows the following carrier aggregation bandwidth classes.

Table 2

| Aggregation bandwidth class | Aggregated channel bandwidth | Number of contiguous carriers | Fallback combination |
|---|---|---|---|
| A | $BW_{channel} \leq BW_{channel,\ max}$ | 1 | 1, 2, 3[4] |
| B | $20\ MHz \leq BW_{channel,\ CA} \leq 100\ MHz$ | 2 | 2, 3[4] |
| C | $100\ MHz \leq BW_{channel,\ CA} \leq 2 \times BW_{channel,\ max}$ | 2 | 1, 3[4] |
| D | $200\ MHz \leq BW_{channel,\ CA} \leq 3 \times BW_{channel,\ max}$ | 3 | |
| E | $300\ MHz \leq BW_{channel,\ CA} \leq 4 \times BW_{channel,\ max}$ | 4 | |
| G | $100\ MHz \leq BW_{channel,\ CA} \leq 150\ MHz$ | 3 | 2 |
| H | $150\ MHz \leq BW_{channel,\ CA} \leq 200\ MHz$ | 4 | |
| I | $200\ MHz \leq BW_{channel,\ CA} \leq 250\ MHz$ | 5 | |
| J | $250\ MHz \leq BW_{channel,\ CA} \leq 300\ MHz$ | 6 | |
| K | $300\ MHz \leq BW_{channel,\ CA} \leq 350\ MHz$ | 7 | |
| L | $350\ MHz \leq BW_{channel,\ CA} \leq 400\ MHz$ | 8 | |
| M[3] | $50\ MHz \leq BW_{channel,\ CA} \leq 200\ MHz$ | 3 | 3[4] |
| N[3] | $80\ MHz \leq BW_{channel,\ CA} \leq 300\ MHz$ | 4 | |
| O[3] | $100\ MHz \leq BW_{channel,\ CA} \leq 400\ MHz$ | 5 | |

For example, if an aggregation bandwidth class of a band is A, it indicates that there is one CC on the band, and the one CC on the band does not exceed a maximum channel bandwidth. The maximum channel bandwidth is a preset value, for example, may be 100 MHz.

For another example, if an aggregation bandwidth class of a band is C, it indicates that there are two contiguous CCs on the band, and an aggregated channel bandwidth of the two contiguous CCs is greater than 100 MHz and is less than or equal to twice a maximum channel bandwidth. For example, when the maximum channel bandwidth is 100 MHz, the aggregated channel bandwidth needs to be less than or equal to 200 MHz.

4.4 Bandwidth combination set (bandwidth combination set, BCS) capability

Band combination-level (BC) capability. This field indicates a bandwidth combination supported by the terminal device in a band combination. A band combination {n41, n78} is used as an example. As shown in Table 3, in different bandwidth combination sets, the band combination corresponds to different bandwidth combinations. For example, in BCS#0, bandwidths of the band n41 may be [10, 15, 20, 40, 50, 60, 80, 100] MHz, and bandwidths of the band n78 may be [10, 15, 20, 40, 50, 60, 80, 90, 100] MHz. In BCS#4 and BCS#5 below, a channel bandwidth of a carrier on the band n41 may be any channel bandwidth supported by the band n41, for example, a channel bandwidth shown in Table 1. Similarly, a channel bandwidth of a carrier on the band n78 may be any channel bandwidth supported by the band n78. It may be understood that all possible channel bandwidth values of a band may be preset in a protocol.

Table 3

| Bandwidth combination sets corresponding to the bands n41 and n78 | n41 | 10, 15, 20, 40, 50, 60, 80, 100 | BCS#0 |
|---|---|---|---|
| | n78 | 10, 15, 20, 40, 50, 60, 80, 90, 100 | |
| | n41 | 10, 15, 20, 30, 40, 50, 60, 80, 90, 100 | BCS#1 |
| | n78 | 10, 15, 20, 25, 30, 40, 50, 60, 70, 80, 90, 100 | |
| | n41 | All channel bandwidths supported by n41 | BCS#4 |
| | n78 | All channel bandwidths supported by n78 | and BCS#5 |

A bandwidth capability of the terminal device is determined based on the capabilities described in 4.1 to 4.4 above. Specifically, when performing carrier aggregation configuration for the terminal device, a network determines, based on the bandwidth capabilities reported by the terminal device, a channel bandwidth configured for each CC. In some implementations, the terminal device determines a bandwidth capability of the terminal device by using an intersection of one or more capabilities in 4.1 to 4.4.

For example, the terminal device reports, by using the channel bandwidth capability, that channel bandwidths supported on the band n41 are [10, 20, 30, 40, 80, 100] MHz, and channel bandwidths supported on the band n78 are [10, 15, 20, 25, 40, 50, 60, 80, 90, 100] MHz. The terminal device reports, by using the bandwidth combination set, that BCS#0 is supported on the band combination {n41, n78}. The terminal device reports, by using the carrier aggregation bandwidth class, that a carrier aggregation bandwidth class of the band n41 in the band combination is A, the band n41 includes one CC, a maximum bandwidth capability of the carrier is 80 M, a carrier aggregation bandwidth class of the band n78 is A, the band n78 includes one CC, and a maximum bandwidth capability of the carrier is 60 M. In conclusion, the network device may determine that for the foregoing band combination, bandwidths configured for the one CC on each band are as follows: band n41: 10, 20, 40, 80 M; and band n78: 10, 15, 20, 40, 50, 60.

With evolution of spectrum and operators' deployment requirements for different bandwidths, BCSs and bandwidths corresponding to the BCSs defined in a protocol are gradually enriched. In R17, BCS#4 and BCS#5 are introduced. BCS#4 indicates that bandwidths supported by the terminal device are all channel bandwidths of the band, that is, bandwidths corresponding to the BCS are not limited by a new bandwidth table, or may be understood as all possible bandwidth combinations of perband channel bandwidths. A minimum carrier bandwidth capability is added to BCS#5 on the basis of BCS#4 and is reported by using an FSPC. In BCS5, the bandwidth capability of the terminal device needs to be limited by the minimum carrier bandwidth capability, that is, a CC bandwidth configured by the network needs to be greater than or equal to the minimum carrier bandwidth. BCS#4 and BCS#5 cannot be simultaneously reported.

As described above, a BCS evolves with a protocol version. BCS#4 and BCS#5 are BCSs introduced in later NR protocol versions. In the market, there are old base stations that are not upgraded to the latest protocol version and that are implemented according to earlier protocol versions. If the terminal device reports BCS#4 or BCS#5 on a band combination, the old base station cannot identify the band combination, and discards the band combination. Consequently, the base station cannot obtain a complete capability of the terminal device, causing a performance loss. Therefore, to ensure that the old base station does not discard the band combination, the terminal device needs to further report, together with BCS#4 or BCS#5, a BCS that is defined in an original NR protocol version and that is supported by the UE capability, for example, BCS#0.

5. Feature set (FeatureSet, FS)

For one band combination, a terminal device may indicate a UE bandwidth capability by using one feature set combination or a plurality of feature set combinations, which may alternatively be understood as one or more rows of feature sets. In other words, there is a correspondence between a band combination and a feature set combination. Each feature set combination includes one or more FSs.

FIG. 3 is a diagram of a feature set combination according to an embodiment of this application. For example, a terminal device reports a maximum carrier bandwidth capability. It is assumed that a band combination includes a band A and a band B, and a plurality of feature set combinations (or understood as a plurality of rows of feature sets) may be used to indicate a maximum bandwidth supported on a CC in the band combination. It is assumed that the band A and the band B each include one CC. In this case, in a first feature set combination, FS1 indicates that a maximum bandwidth of the one CC in the band A is 100 MHz, and FS2 indicates that a maximum bandwidth of the one CC in the band B is 80 MHz; and in a second feature set combination, FS3 indicates that a bandwidth of the one CC in the band A is 90 MHz, and FS4 indicates that a bandwidth of the one CC in the band B is 90 MHz.

To reduce signaling overheads, when reporting a UE capability, the terminal device does not need to report a feature set with a same or lower capability. The feature set with a same or lower capability may also be referred to as a fallback (fallback) feature set. A network device considers by default that the terminal device supports the fallback feature set with a same or lower capability.

For example, in the foregoing case, if the terminal device has reported that the maximum bandwidth of the one CC that is supported by the band A and the maximum bandwidth of the one CC that is supported by the band B are 100 MHz and 80 MHz, the network device considers by default that the terminal device also supports a bandwidth lower than 100 MHz on the band A, and also supports a bandwidth lower than 80 MHz on the band B. However, for example, if the maximum bandwidth of the one CC that is supported by the terminal device on the band A and the maximum bandwidth of the one CC that is supported by the terminal device on the band B are 100 MHz and 90 MHz, reporting needs to be performed by using another row of feature sets. Because 90 MHz supported by the band B is greater than 80 MHz, this cannot be considered as fallback.

In a scenario in which communication is performed through a band combination, a total aggregated bandwidth supported by the terminal device is limited, but there may be different combinations of bandwidth allocations for carriers in the band combination.

With reference to a specific example, the following describes how to determine a carrier-level bandwidth capability of the terminal device and a problem thereof.

In a scenario in which communication is performed through a band combination, a total aggregated bandwidth supported by the terminal device is limited. For example, the band combination is {n25, n41, 266}. Bandwidth combination sets BCSs of the band combination are shown in Table 4.

Table 4

| Bandwidth combination sets corresponding to the bands n25 to n66 | n25 | 5, 10, 15, 20 | BCS#0 |
|---|---|---|---|
| | n41 | 10, 15, 20, 40, 50, 60, 80, 90, 100 | |
| | n66 | 5, 10, 15, 20, 40 | |
| | n25 | 5, 10, 15, 20, 25, 30, 40 | BCS#1 |
| | n41 | 10, 15, 20, 30, 40, 50, 60, 70, 80, 90, 100 | |
| | n66 | 5, 10, 15, 20, 25, 30, 40 | |
| | n25 | All channel bandwidths supported by n25 | BCS#4 or BCS#5 |
| | n41 | All channel bandwidths supported by n78 | |
| | n66 | All channel bandwidths supported by n66 | |

With reference to the bandwidth combination sets, in a case of BCS#4 or BCS#5, the channel bandwidths of n25 are [5, 10, 15, 20, 25, 30, 35, 40, 45] MHz, the channel bandwidths of n41 are [5, 10, 15, 20, 25, 30, 35, 40, 45, 50, 60, 70, 80, 90, 100] MHz, and the channel bandwidths of n66 are [5, 10, 15, 20, 25, 30, 35, 40, 45] MHz.

It is assumed that for the band combination {n25, n41, 266}, the total aggregated bandwidth supported by the terminal device is 120 MHz. In this case, based on a BCS, a possible value of a maximum CC bandwidth on each band included in the band combination is shown in Table 5.

Table 5

| Maximum CC bandwidth on n25 [MHz] | Maximum CC bandwidth on n41 {MHz] | Maximum CC bandwidth on n66 [MHz] | Total aggregated bandwidth [MHz] |
|---|---|---|---|
| 0 | 100 | 20 | 120 |
| 5 | 100 | 15 | 120 |
| 10 | 100 | 10 | 120 |
| 15 | 100 | 5 | 120 |

(continued)

| Maximum CC bandwidth on n25 [MHz] | Maximum CC bandwidth on n41 {MHz] | Maximum CC bandwidth on n66 [MHz] | Total aggregated bandwidth [MHz] |
|---|---|---|---|
| 20 | 100 | 0 | 120 |
| 0 | 90 | 30 | 120 |
| 5 | 90 | 25 | 120 |
| 10 | 90 | 20 | 120 |
| 15 | 90 | 15 | 120 |
| 20 | 90 | 10 | 120 |
| 25 | 90 | 5 | 120 |
| 30 | 90 | 0 | 120 |
| 0 | 80 | 40 | 120 |
| 5 | 80 | 35 | 120 |
| 10 | 80 | 30 | 120 |
| 15 | 80 | 25 | 120 |
| 20 | 80 | 20 | 120 |
| 25 | 80 | 15 | 120 |
| 30 | 80 | 10 | 120 |
| 35 | 80 | 5 | 120 |
| 40 | 80 | 0 | 120 |
| 5 | 70 | 45 | 120 |
| 10 | 70 | 40 | 120 |
| 15 | 70 | 35 | 120 |
| 20 | 70 | 30 | 120 |
| 25 | 70 | 25 | 120 |
| 25 | 70 | 25 | 120 |
| 30 | 70 | 20 | 120 |

Apparently, among the groups of maximum CC bandwidths included in the foregoing table, one group of maximum CC bandwidths cannot be a low capability of another group of maximum CC bandwidths, that is, the foregoing 50 groups of maximum CC bandwidths cannot fall back to each other. Therefore, there are the following two manners in which the terminal device reports a CC capability of the terminal device by using the maximum carrier bandwidth capability:

Manner 1: The terminal device reports the 50 groups of maximum CC bandwidths through enumeration. In this case, the terminal device needs to report the 50 groups of maximum CC bandwidths by using 50 feature set combinations (or understood as 50 rows of feature sets).

Manner 2: The terminal device reports, in a band combination dimension (or understood as band combination-level per BC), a maximum CC bandwidth supported by each CC in the band combination {n25, n41, 266}, and limits, by using the total aggregated bandwidth (Total aggregated BW), a sum of the maximum CC bandwidths to not exceed the total aggregated bandwidth. In this way, one feature set combination may be used to express the foregoing 50 groups of maximum CC bandwidths. For a specific reporting method, refer to Table 6.

Table 6

| Maximum CC bandwidth on n25 [MHz] | Maximum CC bandwidth on n41 {MHz] | Maximum CC bandwidth on n66 [MHz] | Total aggregated bandwidth [MHz] |
|---|---|---|---|
| 45 | 100 | 45 | 120 |

However, the total aggregated bandwidth capability is used for BCS#4 or BCS#5, and is a capability newly added starting from a protocol version. An old base station that is not upgraded to the protocol version cannot identify the capability. Therefore, if the bandwidth capability of the terminal device is reported in Manner 2, compatibility between old and new base stations is problematic.

(1) The old base station supports only an original BCS (for example, BCS#0) and BCS#4/BCS#5, but does not support the total aggregated bandwidth. In this case, after the old base station identifies the maximum carrier bandwidth capability, a sum of all maximum CC bandwidths of the terminal device determined by the old base station exceeds a limit of the total aggregated bandwidth. For example, if configuration is performed in the manner shown in Table 6, when the total aggregated bandwidth is not identified, the old base station performs configuration based on CCs in the band combination {n25, n41, 266} with maximum CC bandwidths of 45 MHz, 100 MHz, and 45 MHz, which exceeds an actual capability of the terminal device.

(2) The old base station supports only an original BCS (that is, a BCS whose BCS sequence number is less than that of BCS#4/5, for example, BCS#0), but does not support BCS#4/BCS#5 or the total aggregated bandwidth. In this case, if the terminal device reports only BCS#4/BCS#5 and the total aggregated bandwidth, the old base station directly discards the band combination, and does not configure the band combination, causing a performance loss.

In another possible implementation, the terminal device reports each group of CC bandwidths in the maximum carrier bandwidth capability through enumeration, and a sum of each group of CC bandwidths is equal to the total aggregated bandwidth (Total aggregated BW). This increases signaling overheads.

Based on the foregoing problem, this application provides a communication method and apparatus, to determine, by using a total aggregated bandwidth and a channel bandwidth of a band, a channel bandwidth of a carrier included in a band in a band combination.

FIG. 4 is a diagram of a communication method according to an embodiment of this application. As shown in FIG. 4, the method may include steps S410 and S420.

S410: A terminal device receives a capability enquiry request (UECapabilityEnquiry) from a network device. Correspondingly, the network device sends the capability enquiry request to the terminal device.

S420: The terminal device sends capability information (UECapabilityInformation) to the network device. Correspondingly, the network device receives the capability information.

The capability information includes first information, and the first information indicates a total aggregated bandwidth (Total aggregated BW) supported by a first band combination. The first band combination may be any band combination supported by the terminal device, the first band combination includes at least one band, and each of the at least one band includes at least one carrier.

The total aggregated bandwidth may also be a total bandwidth or a maximum aggregated bandwidth (maximum aggregated bandwidth). In some implementations, the total aggregated bandwidth may refer to a supported aggregated bandwidth (supportedAggBW) capability, and the capability indicates a maximum aggregated bandwidth of downlink carriers in frequency division duplex in the first band combination, a maximum aggregated bandwidth of uplink carriers in a frequency division duplex band in the first band combination, a maximum aggregated bandwidth of uplink carriers in a time division duplex band in the first band combination, and a maximum aggregated bandwidth of downlink carriers in a time division duplex band in the first band combination.

A channel bandwidth supported by a first carrier is associated with the first information, the first carrier is used for communication between the terminal device and the network device, and the first carrier belongs to a first band in the first band combination. Alternatively, that the channel bandwidth supported by the first carrier is associated with the first information may be replaced with or understood as that the network device determines, based on the first information, the channel bandwidth supported by the first carrier, or the first information is used by the network device to determine the channel bandwidth supported by the first carrier. The first carrier may be replaced with a first cell. Therefore, when receiving the first information indicating a total aggregated bandwidth of a band combination, the network device may determine, based on an association between a total aggregated bandwidth and a channel bandwidth of a carrier, a channel bandwidth supported by a carrier included in the band combination, and allocate, based on a channel bandwidth of a carrier that is supported by the terminal device, a frequency domain resource to the terminal device on the carrier, thereby implement normal communication between the terminal device and the network device.

In an association manner, the channel bandwidth supported by the first carrier is less than or equal to a maximum value of a channel bandwidth supported by the first band, and a sum of channel bandwidths supported by a plurality of carriers is less than or equal to the total aggregated bandwidth supported by the first band combination, where the plurality of carriers are all carriers in all bands included in the first band combination. In other words, a channel bandwidth of one carrier in the first band combination needs to be less than a maximum value of a channel bandwidth of a band to which the carrier belongs, and channel bandwidths of all carriers in the first band combination need to be equal to the total aggregated bandwidth. Therefore, the network device can determine a channel bandwidth of a carrier based on a channel bandwidth of a band and the total aggregated bandwidth.

The maximum value of the channel bandwidth supported by the first band may be preset in a protocol, preconfigured between the network device and the terminal device, or determined based on a channel bandwidth (channel BWs) capability. This is not limited in this application. For example, for a band n41, a maximum channel bandwidth of a single carrier on the band n41 is preset to 100 MHz in the protocol, which may be understood as that the terminal device needs to support a maximum bandwidth value of 100 MHz for the carrier on n41.

In another association manner, for example, for a second carrier, a channel bandwidth supported by the second carrier is less than or equal to a maximum value of a channel bandwidth supported by a band corresponding to the second carrier, the second carrier is any carrier in a plurality of carriers, and the plurality of carriers are all carriers in all bands included in the first band combination. In other words, a channel bandwidth of any carrier in the first band combination needs to be less than a maximum value of a channel bandwidth of a band to which the carrier belongs, and channel bandwidths of all carriers in the first band combination need to be equal to the total aggregated bandwidth. Therefore, the network device can determine a channel bandwidth of a carrier based on a channel bandwidth of a band and the total aggregated bandwidth.

The maximum channel bandwidth supported by the band corresponding to the second carrier may be preset in a protocol, preconfigured between the network device and the terminal device, or determined based on a channel bandwidth (channel BWs) capability. This is not limited in this application.

In some implementations, the total aggregated bandwidth includes a total uplink aggregated bandwidth and a total downlink aggregated bandwidth.

A downlink channel bandwidth supported by the first carrier is less than or equal to a maximum value of a downlink channel bandwidth supported by the first band, and a sum of downlink channel bandwidths supported by the plurality of carriers is less than or equal to a total downlink aggregated bandwidth supported by the first band combination; and/or

an uplink channel bandwidth supported by the first carrier is less than or equal to a maximum value of an uplink channel bandwidth supported by the first band, and a sum of uplink channel bandwidths supported by the plurality of carriers is less than or equal to a total uplink aggregated bandwidth supported by the first band combination.

In other words, the total aggregated bandwidth specifically indicates a total aggregated bandwidth corresponding to uplink carriers in the first band combination, and/or the total aggregated bandwidth specifically indicates a total aggregated bandwidth corresponding to downlink carriers in the first band combination.

In some cases, the method shown in FIG. 4 may have a premise, and the premise is that the terminal device sends a total aggregated bandwidth, a maximum carrier bandwidth capability, and a bandwidth combination set (BCS) by using the capability information. At least one group of maximum CC bandwidths supported by the terminal device on carriers included in a band combination are reported through enumeration by using the maximum carrier bandwidth capability, and a sum of each group of maximum CC bandwidths may be less than or equal to the total aggregated bandwidth supported by the terminal device. That the sum of maximum CC bandwidths is less than the total aggregated bandwidth supported by the terminal device may be understood as that the terminal device does not report all groups of supported maximum CC bandwidths, but reports subsets of all the groups of maximum CC bandwidths.

An old base station that may alternatively be understood as a network device that cannot identify a total aggregated BW may determine, by using a maximum carrier bandwidth capability, a channel bandwidth supported by a carrier in a band combination. Each group of maximum CC bandwidths is specifically reported through enumeration in the maximum carrier bandwidth capability, and a sum of each group of maximum CC bandwidths is equal to the total aggregated bandwidth. Therefore, a bandwidth allocated by the old base station to each carrier in the band combination does not exceed a bandwidth capability of the terminal device, and the terminal device can perform normal communication.

A new base station ignores a maximum carrier bandwidth capability, and uses the method shown in FIG. 4 to determine a channel bandwidth supported by a carrier in a band combination of the terminal device. The new base station may be understood as a base station that supports BCS#4 or BCS#5 and that supports a total aggregated bandwidth. Therefore, the new base station not only avoids an increase in signaling overheads caused by receiving a maximum carrier bandwidth capability, but also ensures correctness of a determined bandwidth capability, thereby implementing normal communication between the terminal device and the network device.

In conclusion, the communication method shown in FIG. 4 can ensure compatibility between the old and new base stations, thereby implementing normal communication.

With reference to Embodiment 1, the following describes the method shown in FIG. 4 by using an example.

Embodiment 1

In an existing first band combination {band A, band B}, the band A and the band B each include one CC. The network device sends a capability enquiry request to the terminal device, and the terminal device sends capability information to the network device. The capability information includes a total aggregated bandwidth, a channel bandwidth (channelBWs) capability, a maximum carrier bandwidth capability, and a bandwidth combination set (BCS).

The details are as follows:

The total aggregated bandwidth indicates a total aggregated bandwidth of 100 MHz supported by the first band combination.

The channel bandwidth (channelBWs) capability indicates that channel bandwidths supported by the band A are [10, 20, 30, 40] MHz, and channel bandwidths supported by the band B are [10, 20, 30, 40, 50, 60, 70, 80] MHz.

The maximum carrier bandwidth capability indicates each group of maximum CC bandwidths supported by CCs included in the first band combination. Because the band A and the band B each include one CC, a band may be used for representation. Details are shown in Table 7.

Table 7

| Maximum CC bandwidth on the band A [MHz] | Maximum CC bandwidth on the band B [MHz] |
| --- | --- |
| 20 | 80 |
| 30 | 70 |
| 40 | 60 |

For the bandwidth combination set (BCS), the first band combination supports BCS#5, that is, supported bandwidths are all channel bandwidths on the band, and a minimum carrier bandwidth capability. For example, minimum carrier bandwidths on the band A and the band B are 10 MHz.

The total aggregated bandwidth (Total aggregated BW) is used for BCS#4 or BCS#5, and is a capability newly added starting from a protocol version. Therefore, an old base station that is not upgraded to the protocol version cannot identify the capability. When the old base station identifies only a maximum carrier bandwidth capability, a carrier bandwidth allocated by the network device to a band combination may exceed a bandwidth capability of the terminal device, and consequently the terminal device cannot perform normal communication.

Therefore, the network device performs the following processing as a new base station or an old base station: The old base station determines, based on the maximum carrier bandwidth capability, channel bandwidths of all carriers included in the first band combination. Details are shown in Table 7. In addition, all low-bandwidth capabilities supported by the terminal device may also be determined based on a fallback relationship. For example, for a first group, a CC channel bandwidth on the band A is any one of [10, 20] MHz, and a CC channel bandwidth on the band B is any one of [10, 20, 30, 40, 50, 60, 70, 80] MHz; for a second group, a CC channel bandwidth on the band A is any one of [10, 20, 30] MHz, and a CC channel bandwidth on the band B is any one of [10, 20, 30, 40, 50, 60, 70] MHz; and for a third group, a CC channel bandwidth on the band A is any one of [10, 20, 30, 40] MHz, and a CC channel bandwidth on the band B is [10, 20, 30, 40, 50, 60] MHz.

The new base station determines, based on the determined total aggregated bandwidth and a channel bandwidth of a band, channel bandwidths of all carriers included in the first band combination. A maximum channel bandwidth of a band may be predefined, or may be determined based on a channel bandwidth (channelBWs) capability reported by the terminal device. For example, based on the channel bandwidth (channelBWs) capability, the new base station determines that a CC channel bandwidth on the band A is less than or equal to 40 MHz, a CC channel bandwidth on the band B is less than or equal to 80 MHz, and the total aggregated bandwidth supported by the first band combination is 100 MHz. Details are shown in Table 8:

Table 8

| CC channel bandwidth on the band A [MHz] | CC channel bandwidth on the band B [MHz] | Total aggregated bandwidth [MHz] |
| --- | --- | --- |
| ≤40 | ≤80 | 100 |

According to Table 8, the maximum CC bandwidth of the maximum carrier bandwidth of the terminal device on each CC may be determined (Table 7).

In addition, the new base station may also determine, based on a fallback relationship, a low-bandwidth capability supported by the terminal device. A specific process of the new base station is the same as that of the old base station, and details are not described herein again.

In addition, because BCS#5, that is, a supported minimum carrier bandwidth capability, is reported, a determined CC channel bandwidth also needs to satisfy the minimum bandwidth capability. For example, a supported minimum CC bandwidth on the band A is 20 MHz, and a supported minimum CC bandwidth on the band B is 30 MHz. In this case, all bandwidths need to be less than the minimum bandwidth. For example, if the CC channel bandwidth on the band A is any one of [10, 20] MHz, and the CC channel bandwidth on the band B is any one of [10, 20, 30, 40, 50, 60, 70, 80] MHz, it is re-determined, based on BCS#5, that the CC channel bandwidth on the band A is [20] MHz, and the CC channel bandwidth on the band B is any one of [30, 40, 50, 60, 70, 80] MHz.

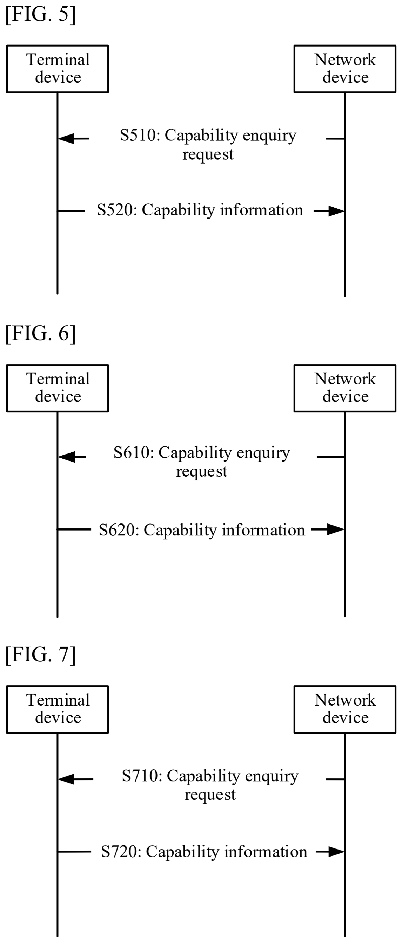

FIG. 5 is a diagram of another communication method according to an embodiment of this application. As shown in FIG. 5, the method may include steps S510 and S520.

S510: A terminal device receives a capability enquiry request (UECapabilityEnquiry) from a network device. Correspondingly, the network device sends the capability enquiry request to the terminal device.

S520: The terminal device sends capability information (UECapabilityInformation) to the network device. Correspondingly, the network device receives the capability information.

The capability information includes first information, and the first information indicates a total aggregated bandwidth supported by a first band combination. The first band combination may be any band combination supported by the terminal device, the first band combination includes at least one band, and each of the at least one band includes at least one carrier.

A specific form of the first information is similar to that described in FIG. 4, and details are not described herein again.

The capability information further includes second information, the second information indicates a maximum channel bandwidth supported by each of a plurality of carriers, and a sum of the maximum channel bandwidths that are supported by the plurality of carriers and that are indicated by the second information is greater than the total aggregated bandwidth supported by the first band combination. Therefore, the network device can determine, based on the first information and the second information, more possible combinations of channel bandwidths supported by carriers in the first band combination.

A channel bandwidth of a third carrier is associated with the first information and the second information. Alternatively, it may be understood that the network device determines the channel bandwidth of the third carrier based on the first information and the second information.

In an association manner, the channel bandwidth supported by the third carrier is less than or equal to a maximum channel bandwidth of the third carrier that is indicated by the second information, the third carrier belongs to the plurality of carriers, the plurality of carriers are all carriers in all bands included in the first band combination, and a sum of channel bandwidths supported by the plurality of carriers is less than or equal to the total aggregated bandwidth supported by the first band combination. In other words, a channel bandwidth of one carrier in the first band combination needs to be less than a corresponding maximum channel bandwidth indicated by the second information, and channel bandwidths of all carriers in the first band combination need to be equal to the total aggregated bandwidth.

In some implementations, the second information is sent by using a newly added field in the capability information. In some implementations, the capability information includes the second information and maximum carrier bandwidth capability information.

In some implementations, the second information may be sent by using a carrier-level feature set (FSPC).

In some implementations, the second information is applicable to a new base station, and the new base station may be understood as a base station that supports BCS#4 or BCS#5 and supports the first information, that is, the total aggregated bandwidth.

With reference to Embodiment 2, the following describes the method shown in FIG. 5 by using an example.

Embodiment 2

In an existing first band combination {band A, band B}, the band A and the band B each include one CC. The network device sends a capability enquiry request to the terminal device, and the terminal device sends capability information to the network device. The capability information includes a total aggregated bandwidth, a channel bandwidth (channelBWs) capability, a maximum carrier bandwidth capability, second information, and a bandwidth combination set (BCS).

The details are as follows:

The total aggregated bandwidth indicates a total aggregated bandwidth of 100 MHz supported by the first band combination.

The channel bandwidth (channelBWs) capability indicates that channel bandwidths supported by the band A are [10, 20, 30, 40] MHz, and channel bandwidths supported by the band B are [10, 20, 30, 40, 50, 60, 70, 80] MHz.

The maximum carrier bandwidth capability indicates each group of maximum CC bandwidths supported by CCs included in the first band combination. Because the band A and the band B each include one CC, a band may be used for representation. Details may be shown in Table 9.

Table 9

| Maximum CC bandwidth on the band A [MHz] | Maximum CC bandwidth on the band B [MHz] |
| --- | --- |
| 20 | 80 |
| 30 | 70 |

The second information indicates a maximum channel bandwidth supported by each carrier in the first combination, and a sum of the maximum channel bandwidths that are supported by the plurality of carriers and that are indicated by the second information may be greater than the total aggregated bandwidth supported by the first band combination. Details may be shown in Table 10.

Table 10

| Maximum channel bandwidth supported by the CC on the band A [MHz] | Maximum channel bandwidth supported by the CC on the band B [MHz] |
| --- | --- |
| 40 | 70 |

In this embodiment, for a single carrier, the terminal device may report both a first carrier bandwidth capability (by using the maximum carrier capability) and a second carrier bandwidth capability (the second information) supported by the carrier. In this case, a channel bandwidth of each carrier in a band combination is determined in the following two manners:

Manner 1: The network device determines the channel bandwidth of each carrier in the band combination based on a first carrier bandwidth capability of each carrier in the band combination, a BCS of the band combination, and a channel bandwidth supported by each band in the band combination.

Manner 2: The network device determines the channel bandwidth of each carrier in the band combination based on a second carrier bandwidth capability of each carrier in the band combination, a total aggregated bandwidth of the band combination, a BCS of the band combination, and a channel bandwidth supported by each band in the band combination.

In this way, even if an old base station that is not upgraded cannot identify the total aggregated bandwidth of the band combination that is reported by the terminal device, according to Manner 1, the old base station can determine the channel bandwidth of each carrier in the band combination, and determine that the channel bandwidth satisfies a capability of the terminal device and does not exceed the capability of the terminal device. This avoids a problem of compatibility between a new terminal device (that is, a terminal device that reports a total aggregated bandwidth capability) and an old base station. A base station that is upgraded to support the total aggregated bandwidth can determine the channel bandwidth of each carrier in the band combination according to Manner 2, thereby reducing signaling overheads.

Because the total aggregated bandwidth and the channel bandwidth (channelBWs) capability listed in Embodiment 2 are the same as those in Embodiment 1, repeated parts are not described herein again.

The old base station determines, by using the maximum carrier bandwidth capability, channel bandwidths of all the carriers included in the first band combination, and the new base station determines, by using the second information, channel bandwidths of all the carriers included in the first band combination. Specific capabilities identified by the old base station and the new base station from various information are shown in Table 11.

Table 11

| | Reference information | CC bandwidth on the band A | CC bandwidth on the band B | Total aggregated bandwidth |
| --- | --- | --- | --- | --- |
| Old base station | Supported bandwidth capability | 20 | 80 | / |
| Old base station | Supported bandwidth capability | 30 | 70 | / |

(continued)

|  | Reference information | CC bandwidth on the band A | CC bandwidth on the band B | Total aggregated bandwidth |
|---|---|---|---|---|
| New base station | Second information | 40 | 70 | 100 |

It can be learned from the foregoing descriptions that, in Embodiment 2, only two groups of maximum CC bandwidths are reported by using the maximum carrier bandwidth capability. Therefore, the old base station determines that CC channel bandwidths respectively supported on the bands in the first band combination are {20, 80} MHz and {30, 70} MHz.

After obtaining the second information, the new base station may determine that CC channel bandwidths respectively supported on the bands in the first band combination are {20, 80} MHz, {30, 70} MHz, and {40, 60} MHz.

FIG. 6 is a diagram of another communication method according to an embodiment of this application. As shown in FIG. 6, the method may include steps S610 and S620.

S610: A terminal device receives a capability enquiry request (UECapabilityEnquiry) from a network device. Correspondingly, the network device sends the capability enquiry request to the terminal device.

S620: The terminal device sends capability information (UECapabilityInformation) to the network device. Correspondingly, the network device receives the capability information.

The capability information includes third information, the third information indicates at least one group of total aggregated bandwidth capabilities supported by a first band combination, and each group of total aggregated bandwidths in the at least one group of total aggregated bandwidths includes a first total aggregated bandwidth and a second total aggregated bandwidth.

The first total aggregated bandwidth indicates a total aggregated bandwidth of carriers in a time division duplex band in the first band combination, and the second total aggregated bandwidth indicates a total aggregated bandwidth of carriers in a frequency division duplex band in the first band combination; and/or

the first total aggregated bandwidth indicates a total aggregated bandwidth of carriers in a band with a frequency within a first frequency range, and the second total aggregated bandwidth indicates a total aggregated bandwidth of carriers in a band with a frequency within a second frequency range, where the first frequency range does not overlap the second frequency range. The first frequency range may be specifically an FR1 band, and the second frequency range may be specifically an FR2 band. Alternatively, the first frequency range and the second frequency range may be other frequency ranges. This is not limited in this application.

In some implementations, a group of total aggregated bandwidths may refer to a 2-tuple, for example, {TDD total aggregated bandwidth, FDD total aggregated bandwidth}, or {FR1 total aggregated bandwidth, FR2 total aggregated bandwidth}. In some implementations, a group of total aggregated bandwidths may alternatively refer to a triplet or a four-tuple, for example, {FR1 TDD total aggregated bandwidth, FR2 TDD total aggregated bandwidth, FR1 FDD total aggregated bandwidth}. This is not limited in this application.

In some implementations, a group of total aggregated bandwidths may be reported at a band combination-level (per BC) capability.

In the method shown in FIG. 6, the terminal device is allowed to report different values through combination in different duplex modes and/or frequency ranges for a same band combination, thereby implementing high flexibility in reporting a bandwidth capability by the terminal device.

In a current capability reporting manner of the terminal device, a feature set combination corresponding to a band combination specifically includes two different levels: a standard feature set (FS) and a carrier-level feature set (FSPC). In the FSPC-level capability, in addition to reporting a supported CC bandwidth, a number of multiple-input multiple-output (Multiple-Input Multiple-Output,MIMO) layers, a subcarrier spacing capability, and the like that are supported by the terminal device on the CC are further indicated. In some possible scenarios, for example, for a TDD+FDD band combination, because a TDD CC and an FDD CC have different subcarrier spacing capabilities, although the TDD CC and the FDD CC occupy a same bandwidth, processing resources may be different. In this case, the TDD carrier and the FDD may correspond to different total aggregated bandwidths, and may correspond to different perFS capabilities. Similarly, for an FR1+FR2 band combination, although a CC on the FR1 band and a CC on the FR2 band occupy a same bandwidth, processing resources may be different. In this case, the CC on the FR1 band and the CC on the FR2 band may correspond to different total aggregated bandwidths, and may correspond to different perFS capabilities. However, only when feature sets in a feature set combination corresponding to a total aggregated bandwidth are completely the same, one feature set combination can be used for reporting.

In some implementations, the capability information includes fourth information, the fourth information includes a feature set combination, and there is a correspondence between the fourth information and the feature set combination. A specific correspondence may be determined based on an actual situation. For example, in some cases, the fourth information may correspond to one feature set combination; and in some cases, the fourth information corresponds to a plurality of feature set combinations. Alternatively, it may be understood that in some cases, the fourth information may correspond to one row of feature sets; and in some cases, the fourth information corresponds to a plurality of rows of feature sets. Content indicated by a specific feature set is not limited in this application, for example, may be a carrier bandwidth, a number of MIMO layers, or a subcarrier spacing capability of the terminal device.

In some implementations, the fourth information includes at least one group of feature set combinations, and the at least one group of total aggregated bandwidths indicated by the third information is in one-to-one correspondence with the at least one group of feature set combinations indicated by the fourth information. The at least one group of total aggregated bandwidths and the at least one group of feature set combinations may be separately arranged in sequence. When one group of total aggregated bandwidths corresponds to a plurality of groups of feature set combinations, the terminal device may report the group of total aggregated bandwidths a plurality of times in the capability information, to ensure a correspondence between each group of total aggregated bandwidths and a feature set combination. For example, as shown in the following, if a first group of total aggregated bandwidths {FDD 60 MHz, TDD 100 MHz} corresponds to a first feature set combination and a 2nd feature set combination, the total aggregated bandwidths may be reported twice to implement a correspondence with both the first feature set combination and the second feature set combination.

> {FDD 60 MHz, TDD 100 MHz} => first feature set combination
> {FDD 60 MHz, TDD 100 MHz} => second feature set combination
> {FDD 70 MHz, TDD 90 MHz} => third feature set combination
> {FDD 80 MHz, TDD 80 MHz} => fourth feature set combination
> {FDD 90 MHz, TDD 70 MHz} => fifth feature set combination

In addition, the method shown in FIG. 6 may be combined with the method shown in FIG. 4 or FIG. 5. The following provides descriptions with reference to specific Embodiment 3.

Embodiment 3

For example, a band combination is {n25, n41, n66}. The foregoing three bands are all FR1 bands, where n25 is an FDD band, and channel bandwidths of n25 are [5, 10, 15, 20, 25, 30, 35, 40, 45] MHz; n41 is a TDD band, and channel bandwidths of n41 are [5, 10, 15, 20, 25, 30, 35, 40, 45, 50, 60, 70, 80, 90, 100] MHz; and n66 is an FDD band, and channel bandwidths of n66 are [5, 10, 15, 20, 25, 30, 35, 40, 45] MHz. It is assumed that a total aggregated bandwidth supported by UE is 160 MHz for the n25+n41+n66 band combination.

The terminal device may deduce 18 different groups of first carrier-level bandwidths shown in Table 12 by using the foregoing four groups of total aggregated bandwidth capabilities {FDD total aggregated bandwidth, TDD aggregated bandwidth} and a channel bandwidth corresponding to each band. Specifically, a manner of determining the CC channel bandwidth on each band is similar to that in Embodiment 1 and Embodiment 2, and details are not described herein again.

Table 12

|  | Bandwidth combination # | CC channel bandwidth on n25 (MHz) | CC channel bandwidth on n41 (MHz) | CC channel bandwidth on n66 (MHz) | Total aggregated bandwidth |
|---|---|---|---|---|---|
| First group | 1 | 15 | 100 | 45 | FDD 60 MHz |
|  | 2 | 20 | 100 | 40 |  |
|  | 3 | 25 | 100 | 35 | TDD 100 MHz |
|  | 4 | 30 | 100 | 30 |  |
|  | 5 | 35 | 100 | 25 |  |
|  | 6 | 40 | 100 | 20 |  |
|  | 7 | 45 | 100 | 15 |  |

(continued)

| | Bandwidth combination # | CC channel bandwidth on n25 (MHz) | CC channel bandwidth on n41 (MHz) | CC channel bandwidth on n66 (MHz) | Total aggregated bandwidth |
|---|---|---|---|---|---|
| Second group | 8 | 25 | 90 | 45 | FDD 70 MHz |
| | 9 | 30 | 90 | 40 | |
| | 10 | 35 | 90 | 35 | TDD 90 MHz |
| | 11 | 40 | 90 | 30 | |
| | 12 | 45 | 90 | 25 | |
| | 13 | 50 | 90 | 20 | |
| | 14 | 55 | 90 | 15 | |
| Third group | 15 | 35 | 80 | 45 | FDD 80 MHz |
| | 16 | 40 | 80 | 40 | |
| | 17 | 45 | 80 | 35 | TDD 80 MHz |
| Fourth group | 18 | 45 | 70 | 45 | FDD 90 MHz TDD 70 MHz |

FIG. 7 is a diagram of another communication method according to an embodiment of this application. As shown in FIG. 7, the method may include steps S710 and S720.

S710: A terminal device receives a capability enquiry request (UECapabilityEnquiry). Correspondingly, a network device sends the capability enquiry request.

S720: The terminal device sends capability information (UECapabilityInformation), where the capability information includes fifth information, the fifth information indicates a first processing capability, the first processing capability is a maximum value of a processing capability supported by M carriers, the M carriers are carriers in a first band or carriers in a first band combination, and M is a positive integer. In some implementations, M is a positive integer greater than or equal to 2.

In the method shown in FIG. 7, the maximum value of the processing capability supported by the M carriers may also be understood as a maximum processing capability supported by the terminal device on the M carriers or a total processing capability supported by the M carriers. Therefore, after receiving the fifth information, the network device can correctly analyze the processing capability supported by the M carriers, thereby implementing flexible capability reporting by the terminal device and ensuring normal communication between the terminal device and the network device.

In addition, the method shown in FIG. 7 can also reduce signaling overheads for capability reporting by the terminal device. Especially in a multi-carrier aggregation scenario, because a carrier bandwidth, a number of MIMO layers, a subcarrier spacing, and the like all affect a processing capability required on one carrier, when a total processing capability of the terminal device for a plurality of carriers is fixed, processing capabilities that can be allocated on the carriers may be combined in different manners. In the foregoing method, the terminal device may report the maximum processing capability supported on the M carriers, and may report a maximum capability supported by each of the M carriers, for example, a maximum number of MIMO layers supported by each carrier and a maximum channel bandwidth supported by each carrier. On a condition that a maximum processing capability range is not exceeded, the network device may determine, based on reported information, a channel bandwidth, a number of MIMO layers, and the like that are supported by each of the M carriers, thereby avoiding signaling overheads caused by the terminal device reporting a plurality of groups of different capability combinations through enumeration in the capability information.

The first processing capability may also be replaced with a total processing capability (processing capability), a total baseband capability, or a total computing resource. This is not limited in this application.

In some implementations, the M carriers are all carriers in the first band, or the M carriers are all carriers in the first band combination. Therefore, the terminal device may report the fifth information to indicate a maximum processing capability supported by all carriers in the first band, or report the fifth information to indicate a maximum processing capability supported by all carriers in the first band combination, so that after receiving the fifth information, the network device can correctly analyze the processing capability supported by the carriers in the band or the band combination, thereby implementing normal communication between the terminal device and the network device. In some implementations, when the network device configures the M carriers for carrier aggregation or dual connectivity communication, a sum of processing capabilities determined based on a number of MIMO layers, a carrier bandwidth, and the like configured for each carrier is less than or equal to the first processing capability indicated by the fifth information. In some implementations, when the network device configures N of the M carriers for communication, a sum of processing capabilities of the N carriers is less than or equal to the first processing capability indicated by the fifth information.

In some implementations, the first processing capability is a perBCperband capability or a perFS capability. Optionally, the fifth information is reported in a FeatureSetDownlink/FeatureSetUplink information element. In some implementations, the first processing capability is a PerBC capability. Optionally, the fifth information is reported in a ca-ParametersNR/ca-ParametersNRDC information element.

When the M carriers are carriers in the first band combination, the M carriers satisfy one or more of the following: the M carriers are carriers in all TDD bands in the first band combination, or the M carriers are carriers in all FDD bands in the first band combination; or the M carriers are carriers in all bands within a first frequency range in the first band combination. For example, the first frequency range may be specifically FR1, FR2, FR2-2, or another frequency range. For another example, the M carriers may alternatively be all carriers in an FR1 TDD band, or all carriers in an FR1 FDD band, or all carriers in an FR2 TDD band. Therefore, the terminal device may report, by using the fifth information, a total processing capability supported by carriers in a TDD band, an FDD band, and/or a band within a specific frequency range, so that after receiving the fifth information, the network device can correctly analyze the processing capability supported by the carriers in the TDD band, the FDD band, and/or the band within the specific frequency range, thereby implementing normal communication between the terminal device and the network device.

In a possible manner, the maximum value of the processing capability supported by the M carriers may be replaced with a maximum value of an uplink processing capability supported by the terminal device on the M carriers and/or a maximum value of a downlink processing capability supported by the terminal device on the M carriers, or a maximum value of a processing capability supported by the terminal device on the M carriers for an uplink and/or a maximum value of a processing capability supported by the terminal device on the M carriers for a downlink. Therefore, the terminal device may report, by using the fifth information, a total processing capability supported by an uplink carrier and/or a total processing capability supported by a downlink carrier, so that after receiving the fifth information, the network device can correctly analyze the processing capability supported by the uplink carrier and/or the processing capability supported by the downlink carrier, thereby implementing normal communication between the terminal device and the network device.

In some implementations, a processing capability supported by a first carrier in the M carriers is determined based on at least one of the following: a number of MIMO layers, a channel bandwidth, a numerology (numerology), an SCS, a scaling factor, or an overhead, where the first carrier is any one of the M carriers. The channel bandwidth may refer to a value of the channel bandwidth supported by the first carrier in a unit of MHz or Hz; or the channel bandwidth may refer to a number of resource blocks (resource block, RB) in the channel bandwidth supported by the first carrier. Therefore, the terminal device reports the supported maximum processing capability, so that the network device can correctly analyze the processing capability supported by the M carriers, thereby implementing normal communication between the terminal device and the network device. Specifically, how the terminal device determines, based on the foregoing parameters, the maximum processing capability supported on the M carriers is determined based on an actual situation. This is not limited in this application.

In some implementations, the processing capability supported by the first carrier is a product of the number of MIMO layers supported by the first carrier and the channel bandwidth supported by the first carrier. In some implementations, the processing capability supported by the first carrier may be understood as a maximum processing capability supported by the first carrier. In some implementations, the processing capability supported by the first carrier includes an uplink processing capability and/or a downlink processing capability supported by the first carrier. The downlink processing capability supported by the first carrier is a product of a number of downlink MIMO layers supported by the first carrier and a downlink channel bandwidth supported by the first carrier. The uplink processing capability supported by the first carrier is a product of a number of uplink MIMO layers supported by the first carrier and an uplink channel bandwidth supported by the first carrier.

In some implementations, the processing capability supported by the first carrier is a product of the number of MIMO layers supported by the first carrier, the channel bandwidth supported by the first carrier, and a first coefficient, where the first coefficient is associated with the SCS supported by the first carrier. In some implementations, the processing capability supported by the first carrier may be understood as a maximum processing capability supported by the first carrier. In some implementations, the processing capability supported by the first carrier includes an uplink processing capability and/or a downlink processing capability supported by the first carrier. The downlink processing capability supported by the first carrier is a product of a number of downlink MIMO layers supported by the first carrier, a downlink channel bandwidth supported by the first carrier, and a first coefficient, where the first coefficient is associated with a downlink SCS supported by the first carrier. The uplink processing capability supported by the first carrier is a product of a number of uplink MIMO layers supported by the first carrier, an uplink channel bandwidth supported by the first carrier, and a first coefficient, where the first coefficient is associated with an uplink SCS supported by the first carrier. The first coefficient associated with the downlink SCS may be the same as or different from the first coefficient associated with the uplink SCS.

The first coefficient may also be understood as a first weighting coefficient or a first weighting factor. For example, a subcarrier spacing of 30 kHz is associated with a first coefficient of 1, and 15 kHz is associated with a first coefficient of 2. The first coefficient associated with the subcarrier spacing may be predefined (for example, preset in a protocol), or may be reported by the terminal device to the network device. For example, the capability information sent by the terminal device further includes thirteenth information, the thirteenth information indicates at least one first coefficient supported by the terminal device, and the at least one first coefficient is associated with a subcarrier spacing supported by the terminal device. The terminal device supports a plurality of carriers, and the plurality of carriers may correspond to a same subcarrier spacing or different subcarrier spacings. For a same subcarrier spacing, first coefficients reported by different terminal devices may be the same or different.

In some implementations, the processing capability supported by the first carrier is a product of the number of MIMO layers supported by the first carrier, the channel bandwidth supported by the first carrier, a modulation order supported by the first carrier, and a first coefficient, where the first coefficient is associated with the SCS supported by the first carrier. In some implementations, the processing capability supported by the first carrier includes an uplink processing capability and/or a downlink processing capability supported by the first carrier. The downlink processing capability supported by the first carrier is a product of a number of downlink MIMO layers supported by the first carrier, a downlink channel bandwidth supported by the first carrier, a downlink modulation order supported by the first carrier, and a first coefficient, where the first coefficient is associated with a downlink SCS supported by the first carrier. The uplink processing capability supported by the first carrier is a product of a number of uplink MIMO layers supported by the first carrier, an uplink channel bandwidth supported by the first carrier, an uplink modulation order supported by the first carrier, and a first coefficient, where the first coefficient is associated with an uplink SCS supported by the first carrier.

In some implementations, the processing capability supported by the first carrier is a product of the number of MIMO layers supported by the first carrier, the channel bandwidth supported by the first carrier, a modulation order supported by the first carrier, and/or the scaling factor supported by the first carrier, and/or the overhead (overhead) supported by the first carrier, and a first coefficient, where the first coefficient is associated with the SCS supported by the first carrier. A value of the scaling factor may be 1, 0.8, 0.75, 0.4, or the like. This is not limited in this application. In some implementations, the processing capability supported by the first carrier includes an uplink processing capability and/or a downlink processing capability supported by the first carrier. The downlink processing capability supported by the first carrier is a product of a number of downlink MIMO layers supported by the first carrier, a downlink channel bandwidth supported by the first carrier, a downlink modulation order supported by the first carrier, and/or a scaling factor supported by the first carrier, and/or an overhead supported by the first carrier, and a first coefficient, where the first coefficient is associated with a downlink SCS supported by the first carrier. The uplink processing capability supported by the first carrier is a product of a number of uplink MIMO layers supported by the first carrier, an uplink channel bandwidth supported by the first carrier, an uplink modulation order supported by the first carrier, and/or a scaling factor supported by the first carrier, and/or an overhead supported by the first carrier, and a first coefficient, where the first coefficient is associated with an uplink SCS supported by the first carrier.

The overhead may be determined based on a band in which the first carrier is located. This is not limited in this application. For example, when the first carrier is in a DL FR1 band, an overhead value is 0.14; when the first carrier is in a DL FR2 band, an overhead value is 0.18; when the first carrier is in a DL FR1 band, an overhead value is 0.08; or when the first carrier is in a UL FR2 band, an overhead value is 0.10.

In some implementations, the first processing capability satisfies:

$$E \geq \sum_{i=1}^{M} \{[V^{(i)} \cdot W^{(i)} \cdot K^{(i)}\}.$$

E is the first processing capability, a value of i is 1, 2, ..., or M, $V^{(i)}$ is a number of MIMO layers supported by an $i^{th}$ carrier in the M carriers, $W^{(i)}$ is a channel bandwidth supported by the $i^{th}$ carrier in the M carriers, $K^{(i)}$ is the first coefficient, and $K^{(i)}$ is associated with an SCS supported by the $i^{th}$ carrier. Optionally, the first processing capability includes a first uplink processing capability and/or downlink processing capability. When the first processing capability in the foregoing formula is specifically the first downlink capability, $V^{(i)}$ is a number of downlink MIMO layers supported by the $i^{th}$ carrier in the M carriers, $W^{(i)}$ is a downlink channel bandwidth supported by the $i^{th}$ carrier in the M carriers, $K^{(i)}$ is the first coefficient, and $K^{(i)}$ is associated with a downlink SCS supported by the $i^{th}$ carrier. When the first processing capability in the foregoing formula is specifically the first uplink capability, $V^{(i)}$ is a number of uplink MIMO layers supported by the $i^{th}$ carrier in the M carriers, $W^{(i)}$ is an uplink channel bandwidth supported by the $i^{th}$ carrier in the M carriers, $K^{(i)}$ is the first coefficient, and $K^{(i)}$ is associated with an uplink SCS supported by the $i^{th}$ carrier.

Because numbers of MIMO layers supported by carriers, namely, numbers of data streams simultaneously transmitted in space, are different, a number of MIMO layers is positively correlated with a processing capability of a carrier.

In addition, a value of a channel bandwidth supported by each carrier is also positively correlated with a processing capability of the carrier. Therefore, the network device may determine, based on the maximum value of the processing capability that is supported by the M carriers and that is reported by the terminal device, a number of MIMO layers, a channel bandwidth, and the like that are supported by each carrier, thereby implementing normal communication between the terminal device and the network device. It should be understood that, in the foregoing implementation, the processing capability supported by the first carrier may be understood as a processing capability supported by the terminal device on the first carrier, and the processing capability supported by the first carrier may be replaced with the maximum processing capability supported by the first carrier. The processing capability supported by the first carrier is determined based on one or more of parameters such as the number of MIMO layers, the channel bandwidth, the subcarrier spacing, and the modulation order that are supported by the first carrier. One or more of parameters such as a number of MIMO layers, a channel bandwidth, a subcarrier spacing, and a modulation order that are configured by the network device for data transmission in a communication process determine a processing capability of the terminal device that needs to be used for communication on the first carrier, and the number of MIMO layers, the channel bandwidth, and the like that can be supported by the terminal device on each carrier when the first processing capability reported by the terminal device to the network device is used by the network device to determine that the total processing capability of the M carriers does not exceed the first processing capability.

In some implementations, in step S720, the capability information further includes M pieces of sixth information and M pieces of seventh information that are in one-to-one correspondence with the M carriers, where each piece of sixth information indicates a maximum number of MIMO layers supported by a corresponding carrier, and each piece of seventh information indicates a maximum channel bandwidth supported by the corresponding carrier. Correspondingly, the network device determines, based on the fifth information, the sixth information, and the seventh information, the number of MIMO layers and the channel bandwidth that are supported by the first carrier.

Specifically, the network device determines a number of MIMO layers and a channel bandwidth that are supported by each of the M carriers, where the number of MIMO layers that is supported by each of the M carriers and that is determined by the network device is less than or equal to a corresponding maximum number of MIMO layers indicated by the sixth information, and the channel bandwidth that is supported by each of the M carriers and that is determined by the network device is less than or equal to a corresponding maximum channel bandwidth indicated by the seventh information. In addition, a sum of products of the numbers of MIMO layers and the channel bandwidths supported by all the carriers in the M carriers is less than or equal to the first processing capability. Therefore, the network device can correctly parse, based on the reported capability information, the numbers of MIMO layers and the channel bandwidths that are supported by the M carriers, thereby reducing signaling overheads and implementing normal communication between the terminal device and the network device.

For example, a maximum number of downlink MIMO layers may be indicated by a maxNumberMIMO-LayersPDSCH information element, and a maximum number of uplink MIMO layers may be indicated by a maxNumberMIMO-LayersCB-PUSCH or maxNumberMIMO-LayersNonCB-PUSCH information element. A maximum number of supported layers is given. A maximum channel bandwidth of a carrier may be indicated by a maximum downlink bandwidth (supportedBandwidthDL) or maximum uplink channel bandwidth supportedBandwidthUL information element.

In some implementations, in step S720, the capability information further includes M pieces of eighth information, M pieces of ninth information, M pieces of tenth information, and M pieces of eleventh information that are in one-to-one correspondence with the M carriers, where each piece of eighth information indicates a first MIMO layer number capability supported by a corresponding carrier, each piece of ninth information indicates a second MIMO layer number capability supported by the corresponding carrier, each piece of tenth information indicates a first bandwidth capability supported by the corresponding carrier, and each piece of eleventh information indicates a second bandwidth capability supported by the corresponding carrier.

When the network device is a first-type base station, the first-type base station determines, based on the M pieces of eighth information and the M pieces of tenth information, the number of MIMO layers and the channel bandwidth that are supported by the first carrier, where the first carrier is any one of the M carriers. Specifically, a channel bandwidth that is supported by each of the M carriers and that is determined by the first-type base station is less than or equal to a first MIMO layer number capability that corresponds to the carrier and that is indicated by eighth information, and the channel bandwidth that is supported by each of the M carriers and that is determined by the first-type base station is less than or equal to a first bandwidth capability that corresponds to the carrier and that is indicated by tenth information. It may be understood that the base station may alternatively determine, based on other information, the channel bandwidth supported by each of the M carriers, and this is not limited in this application.

When the network device is a second-type base station, the second-type base station determines, based on the fifth information, the M pieces of ninth information, and the M pieces of eleventh information, the number of MIMO layers and the channel bandwidth that are supported by the first carrier. Specifically, a channel bandwidth that is supported by each of the M carriers and that is determined by the second-type base station is less than or equal to a second MIMO layer number capability that corresponds to the carrier and that is indicated by ninth information, and the channel bandwidth that is supported by each of the M carriers is less than or equal to a second bandwidth capability that corresponds to the carrier and that is indicated by eleventh information. In addition, a sum of products of the first coefficient and the numbers of MIMO layers and the channel bandwidths that are supported by all of the M carriers and that are determined by the second-type base station is less than or equal to the first processing capability. When the capability information of the terminal device includes all the fifth information, the eighth information, the ninth information, the tenth information, and the eleventh information, the second-type base station ignores the eighth information and the tenth information.

The first-type base station may also be understood as an old base station, or a base station that cannot correctly decode the fifth information and/or cannot decode BCS#4 or BCS#5. The second-type base station may also be understood as a new base station, or a base station that can decode the fifth information and/or can decode BCS#4 or BCS#5. At least one group {first MIMO layer number capability and first bandwidth capability} supported by each of the M carriers may be specifically reported by the terminal device in the capability information by enumerating a plurality of FeatureSet combinations (a plurality of rows of FeatureSets), so that a number of MIMO layers and a channel bandwidth that are supported by a carrier and that are determined by the first-type base station are prevented from exceeding a capability that can be supported by the terminal device. The maximum number of MIMO layers and the maximum channel bandwidth that are supported by each carrier may be reported in the second MIMO layer number capability and the second bandwidth capability by using only one feature set combination (one row of feature sets). Because the second-type base station can parse the first processing capability, the second-type base station may ignore the eighth information and the tenth information that are reported in the capability information, and determine, based on the ninth information and the eleventh information, numbers of MIMO layers and channel bandwidths that are supported by the M carriers, thereby ensuring compatibility between the terminal device and an old base station.

In addition, the method shown in FIG. 7 may be combined with the method shown in FIG. 4, FIG. 5, or FIG. 6. The following provides descriptions with reference to specific Embodiment 4.

Embodiment 4

In an existing first band combination {n25A, n41A, n66A}, the bands n25A, n41A, and n66A respectively include CC1, CC2, and CC3. The network device sends a capability enquiry request to the terminal device, and the terminal device sends capability information to the network device, where the capability information includes fifth information, sixth information, and seventh information.

The details are as follows:

The fifth information indicates a first processing capability, and the first processing capability is that a maximum value of a processing capability supported by the three CCs included in the first band combination is 600.

The sixth information (for example, may be sent by using maxNumberMIMO-LayersPDSCH) indicates that a maximum number of MIMO layers supported by the CC in the band n25A is 4, a maximum number of MIMO layers supported by the CC in the band n41A is 8, and a maximum number of MIMO layers supported by the CC in the band n66A is 4.

The seventh information (for example, may be sent by using supportedBandwidthDL or supportedBandwidthDL-v1710) indicates that a maximum channel bandwidth supported by the CC in the band n25A is 45 MHz, a maximum channel bandwidth supported by the CC in the band n41A is 100 MHz, and a maximum channel bandwidth supported by the CC in the band n66A is 45 MHz.

In this case, for the first band combination, when the network device determines channel bandwidths and numbers of MIMO layers that are supported by the three CCs, the following conditions all need to be satisfied:

(1) The number of MIMO layers supported by each carrier is less than or equal to a corresponding maximum number of MIMO layers indicated by the sixth information.
(2) The channel bandwidth supported by each carrier is less than or equal to a corresponding maximum channel bandwidth indicated by the seventh information.
(3) A sum of products of the numbers of MIMO layers and the channel bandwidths supported by all the carriers is less than or equal to the first processing capability.

For example, the channel bandwidths and the numbers of MIMO layers that are supported by CC1, CC2, and CC3 may be: CC1 45M, 4MIMO; CC2 30M, 8MIMO; and CC3 45M, 4MIMO, where $45 \times 4 + 30 \times 8 + 45 \times 4 = 600$; or

may be: CC1 45M, 4MIMO; CC2 60M, 4MIMO; and CC3 45M, 4MIMO, where $45 \times 4 + 30 \times 8 + 45 \times 4 = 600$; or
may be: CC1 20M, 4MIMO; CC2 100M, 4MIMO; and CC3 20M, 4MIMO, where $20 \times 4 + 100 \times 4 + 20 \times 4 = 560$.

In addition, CC1 45M, 4MIMO; CC2 100M, 8MIMO; and CC3 45M, 4MIMO are not supported. This is because $45 \times 4 + 100 \times 8 + 45 \times 4 = 1160 > 600$.

Therefore, after receiving the capability information, the network device may determine, based on the fifth information, the sixth information, and the seventh information, the channel bandwidth and the number of MIMO layers that are supported by each of the three CCs. Refer to Table 13.

Table 13

| First processing capability 600 | | | | | |
|---|---|---|---|---|---|
| CC1 | | CC2 | | CC3 | |
| Channel bandwidth | Number of MIMO layers | Channel bandwidth | Number of MIMO layers | Channel bandwidth | Number of MIMO layers |
| 45 | 4 | 30 | 8 | 45 | 4 |
| 45 | 4 | 60 | 4 | 45 | 4 |
| First processing capability 600 | | | | | |
| CC1 | | CC2 | | CC3 | |
| Channel bandwidth | Number of MIMO layers | Channel bandwidth | Number of MIMO layers | Channel bandwidth | Number of MIMO layers |
| 20 | 2 | 100 | 4 | 20 | 4 |
| ... | ... | ... | ... | ... | ... |

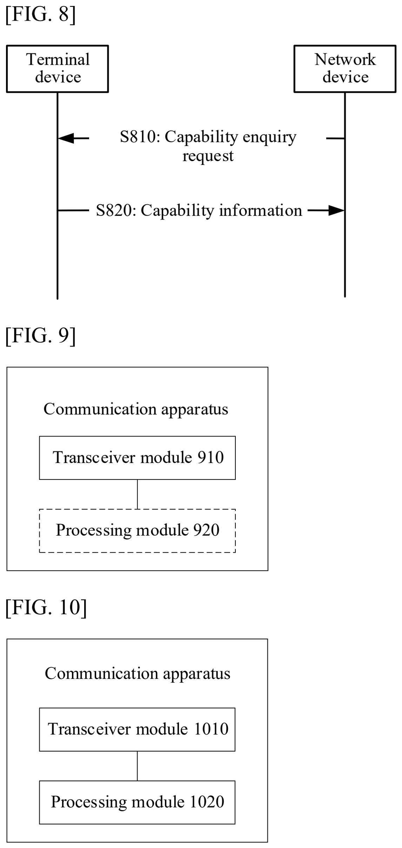

FIG. 8 is a diagram of another communication method according to an embodiment of this application. As shown in FIG. 8, the method may include steps S810 and S820.

S810: A terminal device receives a capability enquiry request (UECapabilityEnquiry). Correspondingly, a network device sends the capability enquiry request.

S820: The terminal device sends capability information (UECapabilityInformation), where the capability information includes twelfth information, the twelfth information indicates a maximum data rate (data rate) supported by M carriers, the M carriers are carriers in a first band or carriers in a first band combination, and M is a positive integer. In some implementations, M is a positive integer greater than or equal to 2.

The maximum data rate may also be replaced with a total data rate, a sum of data rates supported by the M carriers, or the like. This is not limited in this application.

In the method shown in FIG. 8, the terminal device reports the maximum data rate supported by the M carriers, so that after receiving the twelfth information, the network device can correctly analyze the data rate supported by the M carriers, thereby implementing flexible capability reporting by the terminal device and ensuring normal communication between the terminal device and the network device.

In some implementations, the M carriers are all carriers in the first band, or the M carriers are all carriers in the first band combination. Therefore, the terminal device may report the twelfth information to indicate a maximum data rate supported by all carriers in the first band, or report the twelfth information to indicate a maximum data rate supported by all carriers in the first band combination, so that after receiving the twelfth information, the network device can correctly analyze the maximum data rate supported by the carriers in the band or the band combination, thereby implementing normal communication between the terminal device and the network device.

When the M carriers are carriers in the first band combination, the M carriers are carriers in all TDD bands in the first band combination, or the M carriers are carriers in all FDD bands in the first band combination; and/or the M carriers are carriers in all bands within a first frequency range in the first band combination. The first frequency range may be specifically FR1, FR2, FR2-2, or another frequency range. This is not limited in this application. In addition, the M carriers may alternatively be all carriers in an FR1 TDD band, or all carriers in an FR1 FDD band, or all carriers in an FR2 TDD band, or the like. This is not limited in this application. Therefore, the terminal device may report, by using the twelfth information, a maximum data rate supported by carriers in a TDD band, an FDD band, and/or a band within a specific frequency range, so that after receiving the twelfth information, the network device can correctly analyze the maximum data rate supported by the carriers in the TDD band, the FDD band, and/or the band within the specific frequency range, thereby implementing normal communication between the terminal device and the network device.

In some implementations, the maximum data rate supported by the M carriers includes a maximum uplink data rate supported by the M carriers and/or a maximum downlink data rate supported by the M carriers. Alternatively, the maximum data rate supported by the M carriers includes a maximum data rate supported by the M carriers for an uplink and/or a maximum data rate supported by the M carriers for a downlink. Therefore, the terminal device may report, by using the twelfth information, a maximum data rate supported by an uplink carrier and/or a maximum data rate supported by a downlink carrier, so that after receiving the twelfth information, the network device can correctly analyze the maximum data rate supported by the uplink carrier and/or the maximum data rate supported by the downlink carrier, thereby implementing normal communication between the terminal device and the network device.

In some implementations, the maximum data rate satisfies:

$$S \geq 10^{-6} \cdot \sum_{j=1}^{M} [v_{layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot (1 - OH^{(j)})],$$

where

S is the maximum data rate, a value of J is 1, 2, ..., or M, $v_{layers}^{(j)}$ is a number of MIMO layers of a j$^{th}$ carrier in the M carriers, $Q_m^{(j)}$ is a modulation order of the j$^{th}$ carrier in the M carriers, f$^{(j)}$ is a scaling factor of the j$^{th}$ carrier in the M carriers, R$_{max}$ is a maximum code rate, $N_{PRB}^{BW(j)}$ is a maximum number of resource blocks included in the j$^{th}$ carrier in the M carriers when a bandwidth is a channel bandwidth BW(j) in a numerology μ, $T_s^{\mu}$ is average orthogonal frequency division multiplexing (orthogonal frequency division multiplexing, OFDM) symbol duration of the j$^{th}$ carrier in the M carriers in the numerology μ, and OH$^{(j)}$ is an overhead corresponding to the j$^{th}$ carrier in the M carriers. $v_{layers}^{(j)}$ may alternatively be a maximum number of supported layers given by maxNumberMIMO-LayersPDSCH for a downlink, or may be a maximum number of supported layers given by maxNumberMIMO-LayersCB-PUSCH or maxNumberMIMO-Layers-NonCB-PUSCH for an uplink. $Q_m^{(j)}$ may alternatively be a maximum supported modulation order given by supportedModulationOrderDL for a downlink, or may be a maximum supported modulation order given by supportedModulationOrderUL for an uplink.

f$^{(j)}$ may be a scaling factor provided by scalingFactor or scalingFactor-1024QAM-FR1, and a value may be 1, 0.8, 0.75, or 0.4.

The numerology μ may be defined in TS 38.211 [6]. $N_{PRB}^{BW(j)}$ may be defined in 5.3 TS 38.101-1 [2], 5.3 TS 38.101-2 [3], and 5.3 TS 38.101-5 [34], where BW(j) is a maximum bandwidth supported by a band or a band combination.

In a case of using a normal cyclic prefix, $T_s^{\mu} = \frac{10^{-3}}{14 \cdot 2^{\mu}}$ .

OH$^{(j)}$ is the overhead. When a first carrier is within an FR1 frequency range for a downlink, a value is 0.14. When the first carrier is within an FR2 frequency range for a downlink, a value is 0.18. When the first carrier is within an FR1 frequency range for an uplink, a value is 0.08. When the first carrier is within an FR2 frequency range for an uplink, a value is 0.10.

In addition, the method shown in FIG. 8 may be combined with the methods shown in FIG. 4, FIG. 5, FIG. 6, and FIG. 7. This is not limited in this application.

The foregoing describes the method embodiments of embodiments of this application, and the following describes corresponding apparatus embodiments. The method embodiments correspond to the apparatus embodiments. Therefore, for parts that are not described in detail, refer to each other.

FIG. 9 is a diagram of another communication apparatus according to an embodiment of this application. The apparatus may include a transceiver module 910 and a processing module 920.

The transceiver module 910 is configured to receive a capability enquiry request (UECapabilityEnquiry).

The transceiver module 910 is further configured to send capability information (UECapabilityInformation).

A specific form of the capability information is as follows:

Form A

The capability information includes first information, and the first information indicates a total aggregated bandwidth supported by a first band combination. The first band combination may be any band combination supported by the terminal device, the first band combination includes at least one band, and each of the at least one band includes at least one carrier.

The total aggregated bandwidth may also be a total bandwidth or a maximum aggregated bandwidth (maximum aggregated bandwidth). In some implementations, the total aggregated bandwidth may refer to a supported aggregated bandwidth (supportedAggBW) capability, and the capability indicates a maximum aggregated bandwidth of downlink carriers in frequency division duplex in the first band combination, a maximum aggregated bandwidth of uplink carriers in a frequency division duplex band in the first band combination, a maximum aggregated bandwidth of uplink carriers in a time division duplex band in the first band combination, and a maximum aggregated bandwidth of downlink carriers in a time division duplex band in the first band combination.

A channel bandwidth supported by a first carrier is associated with the first information, the first carrier is used for communication between the terminal device and a network device, and the first carrier belongs to a first band in the first band combination. Alternatively, that the channel bandwidth supported by the first carrier is associated with the first information may be replaced with or understood as that the network device determines, based on the first information, the channel bandwidth supported by the first carrier, or the first information is used by the network device to determine the channel bandwidth supported by the first carrier. The first carrier may be replaced with a first cell. Therefore, when receiving the first information indicating a total aggregated bandwidth of a band combination, the network device may determine, based on an association between a total aggregated bandwidth and a channel bandwidth of a carrier, a channel bandwidth supported by a carrier included in the band combination, and allocate, based on a channel bandwidth of a carrier that is supported by the terminal device, a frequency domain resource to the terminal device on the carrier, thereby implementing normal communication between the terminal device and the network device.

In an association manner, the channel bandwidth supported by the first carrier is less than or equal to a maximum value of a channel bandwidth supported by the first band, and a sum of channel bandwidths supported by a plurality of carriers is less than or equal to the total aggregated bandwidth supported by the first band combination, where the plurality of carriers are all carriers in all bands included in the first band combination. In other words, a channel bandwidth of one carrier in the first band combination needs to be less than a maximum value of a channel bandwidth of a band to which the carrier belongs, and channel bandwidths of all carriers in the first band combination need to be equal to the total aggregated bandwidth. Therefore, the network device can determine a channel bandwidth of a carrier based on a channel bandwidth of a band and the total aggregated bandwidth.

The channel bandwidth supported by the first carrier may be preset according to a protocol, preconfigured between the network device and the terminal device, or determined based on a channel bandwidth (channel BWs) capability. This is not limited in this application.

In another association manner, for example, for a second carrier, a channel bandwidth supported by the second carrier is less than or equal to a maximum value of a channel bandwidth supported by a band corresponding to the second carrier, the second carrier is any carrier in a plurality of carriers, and the plurality of carriers are all carriers in all bands included in the first band combination. In other words, a channel bandwidth of any carrier in the first band combination needs to be less than a maximum value of a channel bandwidth of a band to which the carrier belongs, and channel bandwidths of all carriers in the first band combination need to be equal to the total aggregated bandwidth. Therefore, the network device can determine a channel bandwidth of a carrier based on a channel bandwidth of a band and the total aggregated bandwidth.

The channel bandwidth supported by the second carrier may be preset according to a protocol, preconfigured between the network device and the terminal device, or determined based on a channel bandwidth (channel BWs) capability. This is not limited in this application.

In some implementations, the total aggregated bandwidth includes a total uplink aggregated bandwidth and a total downlink aggregated bandwidth.

A downlink channel bandwidth supported by the first carrier is less than or equal to a maximum value of a downlink channel bandwidth supported by the first band, and a sum of downlink channel bandwidths supported by the plurality of carriers is less than or equal to a total downlink aggregated bandwidth supported by the first band combination; and/or

an uplink channel bandwidth supported by the first carrier is less than or equal to a maximum value of an uplink channel bandwidth supported by the first band, and a sum of uplink channel bandwidths supported by the plurality of carriers is less than or equal to a total uplink aggregated bandwidth supported by the first band combination.

In other words, the total aggregated bandwidth specifically indicates a total aggregated bandwidth corresponding to uplink carriers in the first band combination, and/or the total aggregated bandwidth specifically indicates a total aggregated bandwidth corresponding to downlink carriers in the first band combination.

Form B

The capability information includes first information and second information, the second information indicates a maximum channel bandwidth supported by each of a plurality of carriers, and a sum of the maximum channel bandwidths that are supported by the plurality of carriers and that are indicated by the second information is greater than a total aggregated bandwidth supported by a first band combination.

A channel bandwidth of a third carrier is associated with the first information and the second information.

In an association manner, the channel bandwidth supported by the third carrier is less than or equal to a maximum channel bandwidth of the third carrier that is indicated by the second information, the third carrier belongs to the plurality of carriers, the plurality of carriers are all the carriers in all the bands included in the first band combination, and the sum of the channel bandwidths supported by the plurality of carriers is less than or equal to the total aggregated bandwidth supported by the first band combination. In other words, a channel bandwidth of one carrier in the first band combination needs to be less than a corresponding maximum channel bandwidth indicated by the second information, and channel bandwidths of all carriers in the first band combination need to be equal to the total aggregated bandwidth. Therefore, the network device can determine, based on the first information and the second information, more possible combinations of channel bandwidths supported by carriers in the first band combination.

In some implementations, the second information is sent by using a newly added field in the capability information. In some implementations, the capability information includes the second information and maximum carrier bandwidth capability information.

In some implementations, the second information may be sent by using a carrier-level feature set (FSPC).

In some implementations, the second information is applicable to a new base station, and the new base station may be understood as a base station that supports BCS#4 or BCS#5 and supports the first information, that is, the total aggregated bandwidth.

Form C

The capability information includes third information, the third information indicates at least one group of total aggregated bandwidth capabilities supported by a first band combination, and each group of total aggregated bandwidths in the at least one group of total aggregated bandwidths includes a first total aggregated bandwidth and a second total aggregated bandwidth.

The first total aggregated bandwidth indicates a total aggregated bandwidth of carriers in a time division duplex band in the first band combination, and the second total aggregated bandwidth indicates a total aggregated bandwidth of carriers in a frequency division duplex band in the first band combination; and/or

the first total aggregated bandwidth indicates a total aggregated bandwidth of carriers in a band with a frequency within a first frequency range, and the second total aggregated bandwidth indicates a total aggregated bandwidth of carriers in a band with a frequency within a second frequency range, where the first frequency range does not overlap the second frequency range. The first frequency range may be specifically an FR1 band, and the second frequency range may be specifically an FR2 band. Alternatively, the first frequency range and the second frequency range may be other frequency ranges. This is not limited in this application.

The capability information includes third information, the third information indicates at least one group of total aggregated bandwidth capabilities supported by a first band combination, and each group of total aggregated bandwidths in the at least one group of total aggregated bandwidths includes a first total aggregated bandwidth and a second total aggregated bandwidth.

The first total aggregated bandwidth indicates a total aggregated bandwidth of carriers in a time division duplex band in the first band combination, and the second total aggregated bandwidth indicates a total aggregated bandwidth of carriers in a frequency division duplex band in the first band combination; and/or

the first total aggregated bandwidth indicates a total aggregated bandwidth of carriers in a band with a frequency within a first frequency range, and the second total aggregated bandwidth indicates a total aggregated bandwidth of carriers in a band with a frequency within a second frequency range, where the first frequency range does not overlap the second frequency range. The first frequency range may be specifically an FR1 band, and the second frequency range may be specifically an FR2 band. Alternatively, the first frequency range and the second frequency range may be other frequency ranges. This is not limited in this application.

In some implementations, the capability information includes fourth information, the fourth information includes a feature set combination, and there is a correspondence between the fourth information and the feature set combination. A specific correspondence may be determined based on an actual situation. For example, in some cases, the fourth information may correspond to one feature set combination; and in some cases, the fourth information corresponds to a plurality of feature set combinations. Alternatively, it may be understood that in some cases, the fourth information may correspond to one row of feature sets; and in some cases, the fourth information corresponds to a plurality of rows of feature sets. Content indicated by a specific feature set is not limited in this application, for example, may be a carrier bandwidth, a number of MIMO layers, or a subcarrier spacing capability of the terminal device.

In some implementations, the fourth information includes at least one group of feature set combinations, and the at least one group of total aggregated bandwidths indicated by the third information is in one-to-one correspondence with the at least one group of feature set combinations indicated by the fourth information. The at least one group of total aggregated bandwidths and the at least one group of feature set combinations may be separately arranged in sequence. When one group of total aggregated bandwidths corresponds to a plurality of groups of feature set combinations, the terminal device may report the group of total aggregated bandwidths a plurality of times in the capability information, to ensure a correspondence between each group of total aggregated bandwidths and a feature set combination.

Form D

The capability information includes fifth information, the fifth information indicates a first processing capability, the first processing capability is a maximum value of a processing capability supported by M carriers, the M carriers are carriers in a first band or carriers in a first band combination, and M is a positive integer. In some implementations, M is a positive integer greater than or equal to 2.

In some implementations, the M carriers are all carriers in the first band, or the M carriers are all carriers in the first band combination. In some implementations, when a network device configures the M carriers for carrier aggregation or dual connectivity communication, a sum of processing capabilities determined based on a number of MIMO layers, a carrier bandwidth, and the like configured for each carrier is less than or equal to the first processing capability indicated by the fifth information. In some implementations, when the network device configures N of the M carriers for communication, a sum of processing capabilities of the N carriers is less than or equal to the first processing capability indicated by the fifth information.

In some implementations, the first processing capability is a perBCperband capability or a perFS capability. Optionally, the fifth information is reported in a FeatureSetDownlink/FeatureSetUplink information element. In some implementations, the first processing capability is a PerBC capability. Optionally, the fifth information is reported in a ca-ParametersNR/ca-ParametersNRDC information element.

When the M carriers are carriers in the first band combination, the M carriers satisfy one or more of the following: the M carriers are carriers in all TDD bands in the first band combination, or the M carriers are carriers in all FDD bands in the first band combination; or the M carriers are carriers in all bands within a first frequency range in the first band combination. For example, the first frequency range may be specifically FR1, FR2, FR2-2, or another frequency range. For another example, the M carriers may alternatively be all carriers in an FR1 TDD band, or all carriers in an FR1 FDD band, or all carriers in an FR2 TDD band. Therefore, the terminal device may report, by using the fifth information, a total processing capability supported by carriers in a TDD band, an FDD band, and/or a band within a specific frequency range, so that after receiving the fifth information, the network device can correctly analyze the processing capability supported by the carriers in the TDD band, the FDD band, and/or the band within the specific frequency range, thereby implementing normal communication between the terminal device and the network device.

In a possible manner, the maximum value of the processing capability supported by the M carriers may be replaced with a maximum value of an uplink processing capability supported by the terminal device on the M carriers and/or a maximum value of a downlink processing capability supported by the terminal device on the M carriers, or a maximum value of a processing capability supported by the terminal device on the M carriers for an uplink and/or a maximum value of a processing capability supported by the terminal device on the M carriers for a downlink.

In some implementations, a processing capability supported by a first carrier in the M carriers is determined based on at least one of the following: a number of MIMO layers, a channel bandwidth, a numerology (numerology), an SCS, a scaling factor, or an overhead, where the first carrier is any one of the M carriers. The channel bandwidth may refer to a value of the channel bandwidth supported by the first carrier in a unit of MHz or Hz; or the channel bandwidth may refer to a number of resource blocks (resource block, RB) in the channel bandwidth supported by the first carrier.

In some implementations, the processing capability supported by the first carrier is a product of the number of MIMO layers supported by the first carrier and the channel bandwidth supported by the first carrier. In some implementations, the processing capability supported by the first carrier may be understood as a maximum processing capability supported by the first carrier. In some implementations, the processing capability supported by the first carrier includes an uplink processing capability and/or a downlink processing capability supported by the first carrier. The downlink processing capability supported by the first carrier is a product of a number of downlink MIMO layers supported by the first carrier and a downlink channel bandwidth supported by the first carrier. The uplink processing capability supported by the first carrier is a product of a number of uplink MIMO layers supported by the first carrier and an uplink channel bandwidth supported by the first carrier.

In some implementations, the processing capability supported by the first carrier is a product of the number of MIMO layers supported by the first carrier, the channel bandwidth supported by the first carrier, and a first coefficient, where the first coefficient is associated with the SCS supported by the first carrier. In some implementations, the processing capability supported by the first carrier may be understood as a maximum processing capability supported by the first carrier. In some implementations, the processing capability supported by the first carrier includes an uplink processing capability and/or a downlink processing capability supported by the first carrier. The downlink processing capability supported by the first carrier is a product of a number of downlink MIMO layers supported by the first carrier, a downlink channel bandwidth supported by the first carrier, and a first coefficient, where the first coefficient is associated with a downlink SCS supported by the first carrier. The uplink processing capability supported by the first carrier is a product of a number of uplink MIMO layers supported by the first carrier, an uplink channel bandwidth supported by the first carrier, and a first coefficient, where the first coefficient is associated with an uplink SCS supported by the first carrier. The first coefficient associated with the downlink SCS may be the same as or different from the first coefficient associated with the uplink SCS.

In some implementations, the processing capability supported by the first carrier is a product of the number of MIMO layers supported by the first carrier, the channel bandwidth supported by the first carrier, a modulation order supported by the first carrier, and a first coefficient, where the first coefficient is associated with the SCS supported by the first carrier. In some implementations, the processing capability supported by the first carrier includes an uplink processing capability and/or a downlink processing capability supported by the first carrier. The downlink processing capability supported by the first carrier is a product of a number of downlink MIMO layers supported by the first carrier, a downlink channel bandwidth supported by the first carrier, a downlink modulation order supported by the first carrier, and a first coefficient, where the first coefficient is associated with a downlink SCS supported by the first carrier. The uplink processing capability supported by the first carrier is a product of a number of uplink MIMO layers supported by the first carrier, an uplink channel bandwidth supported by the first carrier, an uplink modulation order supported by the first carrier, and a first coefficient, where the first coefficient is associated with an uplink SCS supported by the first carrier.

In some implementations, the processing capability supported by the first carrier is a product of the number of MIMO layers supported by the first carrier, the channel bandwidth supported by the first carrier, a modulation order supported by the first carrier, and/or the scaling factor supported by the first carrier, and/or the overhead (overhead) supported by the first carrier, and a first coefficient, where the first coefficient is associated with the SCS supported by the first carrier. In some implementations, the processing capability supported by the first carrier includes an uplink processing capability and/or a downlink processing capability supported by the first carrier. The downlink processing capability supported by the first carrier is a product of a number of downlink MIMO layers supported by the first carrier, a downlink channel bandwidth supported by the first carrier, a downlink modulation order supported by the first carrier, and/or a scaling factor supported by the first carrier, and/or an overhead supported by the first carrier, and a first coefficient, where the first coefficient is associated with a downlink SCS supported by the first carrier. The uplink processing capability supported by the first carrier is a product of a number of uplink MIMO layers supported by the first carrier, an uplink channel bandwidth supported by the first carrier, an uplink modulation order supported by the first carrier, and/or a scaling factor supported by the first carrier, and/or an overhead supported by the first carrier, and a first coefficient, where the first coefficient is associated with an uplink SCS supported by the first carrier.

In some implementations, the first processing capability satisfies:

$$ E \geq \sum_{i=1}^{M} \left\{ [V^{(i)} \cdot W^{(i)} \cdot K^{(i)} \right\}. $$

E is the first processing capability, a value of i is 1, 2, ..., or M, $V^{(i)}$ is a number of MIMO layers supported by an $i^{th}$ carrier in the M carriers, $W^{(i)}$ is a channel bandwidth supported by the $i^{th}$ carrier in the M carriers, $K^{(i)}$ is the first coefficient, and $K^{(i)}$ is associated with an SCS supported by the $i^{th}$ carrier. Optionally, the first processing capability includes a first uplink processing capability and/or downlink processing capability. When the first processing capability in the foregoing formula is specifically the first downlink capability, $V^{(i)}$ is a number of downlink MIMO layers supported by the $i^{th}$ carrier in the M carriers, $W^{(i)}$ is a downlink channel bandwidth supported by the $i^{th}$ carrier in the M carriers, $K^{(i)}$ is the first coefficient, and $K^{(i)}$ is associated with a downlink SCS supported by the $i^{th}$ carrier. When the first processing capability in the foregoing formula is specifically the first uplink capability, $V^{(i)}$ is a number of uplink MIMO layers supported by the $i^{th}$ carrier in the M carriers, $W^{(i)}$ is an uplink channel bandwidth supported by the $i^{th}$ carrier in the M carriers, $K^{(i)}$ is the first coefficient, and $K^{(i)}$ is associated with an uplink SCS supported by the $i^{th}$ carrier.

In some implementations, the capability information further includes M pieces of eighth information, M pieces of ninth information, M pieces of tenth information, and M pieces of eleventh information that are in one-to-one correspondence with the M carriers, where each piece of eighth information indicates a first MIMO layer number capability supported by a corresponding carrier, each piece of ninth information indicates a second MIMO layer number capability supported by the corresponding carrier, each piece of tenth information indicates a first bandwidth capability supported by the corresponding carrier, and each piece of eleventh information indicates a second bandwidth capability supported by the corresponding carrier. The M pieces of eighth information and the M pieces of tenth information are used by a first-type base station to determine the number of MIMO layers and the channel bandwidth that are supported by the first carrier, and the first carrier is any one of the M carriers. The fifth information, the ninth information, and the eleventh information are used by a second-type base station to determine the number of MIMO layers and the channel bandwidth that are supported by the first carrier.

Form E

The capability information includes twelfth information, the twelfth information indicates a maximum data rate (data rate) supported by M carriers, the M carriers are carriers in a first band or carriers in a first band combination, and M is a positive integer. In some implementations, M is a positive integer greater than or equal to 2.

In some implementations, the M carriers are all carriers in the first band, or the M carriers are all carriers in the first band combination.

In some implementations, the maximum data rate supported by the M carriers includes a maximum uplink data rate supported by the M carriers and/or a maximum downlink data rate supported by the M carriers. Alternatively, the maximum data rate supported by the M carriers includes a maximum data rate supported by the M carriers for an uplink and/or a maximum data rate supported by the M carriers for a downlink.

In some implementations, the maximum data rate satisfies:

$$S \geq 10^{-6} \cdot \sum_{j=1}^{M} [v_{layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot (1 - OH^{(j)})],$$

where

S is the maximum data rate, a value of J is 1, 2, ..., or M, $v_{layers}^{(j)}$ is a number of MIMO layers of a $j^{th}$ carrier in the M carriers, $Q_m^{(j)}$ is a modulation order of the $j^{th}$ carrier in the M carriers, $f^{(j)}$ is a scaling factor of the $j^{th}$ carrier in the M carriers, $R_{max}$ is a maximum code rate, $N_{PRB}^{BW(j)}$ is a maximum number of resource blocks included in the $j^{th}$ carrier in the M carriers when a bandwidth is a channel bandwidth BW(j) in a numerology $\mu$, $T_s^{\mu}$ is average orthogonal frequency division multiplexing (orthogonal frequency division multiplexing, OFDM) symbol duration of the $j^{th}$ carrier in the M carriers in the numerology $\mu$, and $OH^{(j)}$ is an overhead corresponding to the $j^{th}$ carrier in the M carriers.

FIG. 10 is a diagram of a communication apparatus according to an embodiment of this application. The apparatus may include a transceiver module 1010 and a processing module 1020.

The transceiver module 1010 is configured to send a capability enquiry request (UECapabilityEnquiry).

The transceiver module 1010 is further configured to receive capability information (UECapabilityInformation).

A specific form of the capability information is as follows:

Form A

The capability information includes first information, and the first information indicates a total aggregated bandwidth supported by a first band combination. The first band combination may be any band combination supported by a terminal device, the first band combination includes at least one band, and each of the at least one band includes at least one carrier.

A channel bandwidth supported by a first carrier is associated with the first information, the first carrier is used for communication between the terminal device and the network device, and the first carrier belongs to a first band in the first band combination. In other words, the processing module 1020 is configured to determine, based on the first information, the channel bandwidth supported by the first carrier. Therefore, when receiving the first information indicating a total aggregated bandwidth of a band combination, the network device may determine, based on an association between a total aggregated bandwidth and a channel bandwidth of a carrier, a channel bandwidth supported by a carrier included in the band combination, and allocate, based on a channel bandwidth of a carrier that is supported by the terminal device, a frequency domain resource to the terminal device on the carrier, thereby implementing normal communication between the terminal device and the network device.

In an association manner, the channel bandwidth supported by the first carrier is less than or equal to a maximum value of a channel bandwidth supported by the first band, and a sum of channel bandwidths supported by a plurality of carriers is less than or equal to the total aggregated bandwidth supported by the first band combination, where the plurality of carriers are all carriers in all bands included in the first band combination. In other words, a channel bandwidth of one carrier in the first band combination needs to be less than a maximum value of a channel bandwidth of a band to which the carrier belongs, and channel bandwidths of all carriers in the first band combination need to be equal to the total aggregated bandwidth. Therefore, the network device can determine a channel bandwidth of a carrier based on a channel bandwidth of a band and the total aggregated bandwidth.

The channel bandwidth supported by the first carrier may be preset according to a protocol, preconfigured between the network device and the terminal device, or determined based on a channel bandwidth (channel BWs) capability. This is not limited in this application.

In another association manner, for example, for a second carrier, a channel bandwidth supported by the second carrier is less than or equal to a maximum value of a channel bandwidth supported by a band corresponding to the second carrier, the second carrier is any carrier in a plurality of carriers, and the plurality of carriers are all carriers in all bands included in the first band combination. In other words, a channel bandwidth of any carrier in the first band combination needs to be less than a maximum value of a channel bandwidth of a band to which the carrier belongs, and channel bandwidths of all carriers in the first band combination need to be equal to the total aggregated bandwidth. Therefore, the network device can determine a channel bandwidth of a carrier based on a channel bandwidth of a band and the total aggregated bandwidth.

The channel bandwidth supported by the second carrier may be preset according to a protocol, preconfigured between the network device and the terminal device, or determined based on a channel bandwidth (channel BWs) capability. This is not limited in this application.

In some implementations, the total aggregated bandwidth includes a total uplink aggregated bandwidth and a total downlink aggregated bandwidth.

A downlink channel bandwidth supported by the first carrier is less than or equal to a maximum value of a downlink channel bandwidth supported by the first band, and a sum of downlink channel bandwidths supported by the plurality of carriers is less than or equal to a total downlink aggregated bandwidth supported by the first band combination; and/or

an uplink channel bandwidth supported by the first carrier is less than or equal to a maximum value of an uplink channel bandwidth supported by the first band, and a sum of uplink channel bandwidths supported by the plurality of carriers is less than or equal to a total uplink aggregated bandwidth supported by the first band combination.

In other words, the total aggregated bandwidth specifically indicates a total aggregated bandwidth corresponding to uplink carriers in the first band combination, and/or the total aggregated bandwidth specifically indicates a total aggregated bandwidth corresponding to downlink carriers in the first band combination.

Form B

The capability information includes first information and second information, the second information indicates a maximum channel bandwidth supported by each of a plurality of carriers, and a sum of the maximum channel bandwidths that are supported by the plurality of carriers and that are indicated by the second information is greater than a total aggregated bandwidth supported by a first band combination.

A channel bandwidth of a third carrier is associated with the first information and the second information. In other words, the processing module 1030 is configured to determine, based on the first information and the second information, a channel bandwidth supported by a first carrier.

In an association manner, the channel bandwidth supported by the third carrier is less than or equal to a maximum channel bandwidth of the third carrier that is indicated by the second information, the third carrier belongs to the plurality of carriers, the plurality of carriers are all the carriers in all the bands included in the first band combination, and the sum of the channel bandwidths supported by the plurality of carriers is less than or equal to the total aggregated bandwidth supported by the first band combination. In other words, a channel bandwidth of one carrier in the first band combination needs to be less than a corresponding maximum channel bandwidth indicated by the second information, and channel bandwidths of all carriers in the first band combination need to be equal to the total aggregated bandwidth. Therefore, the network device can determine, based on the first information and the second information, more possible combinations of channel bandwidths supported by carriers in the first band combination.

In some implementations, the second information is sent by using a newly added field in the capability information. In some implementations, the capability information includes the second information and maximum carrier bandwidth capability information.

In some implementations, the second information may be sent by using a carrier-level feature set (FSPC).

In some implementations, the second information is applicable to a new base station, and the new base station may be understood as a base station that supports BCS#4 or BCS#5 and supports the first information, that is, the total aggregated bandwidth.

Form C

The capability information includes third information, the third information indicates at least one group of total aggregated bandwidth capabilities supported by a first band combination, and each group of total aggregated bandwidths in the at least one group of total aggregated bandwidths includes a first total aggregated bandwidth and a second total aggregated bandwidth.

The first total aggregated bandwidth indicates a total aggregated bandwidth of carriers in a time division duplex band in the first band combination, and the second total aggregated bandwidth indicates a total aggregated bandwidth of carriers in a frequency division duplex band in the first band combination; and/or

the first total aggregated bandwidth indicates a total aggregated bandwidth of carriers in a band with a frequency within a first frequency range, and the second total aggregated bandwidth indicates a total aggregated bandwidth of carriers in a band with a frequency within a second frequency range, where the first frequency range does not overlap the second frequency range. The first frequency range may be specifically an FR1 band, and the second frequency range may be specifically an FR2 band. Alternatively, the first frequency range and the second frequency range may be other frequency ranges. This is not limited in this application.

The capability information includes third information, the third information indicates at least one group of total aggregated bandwidth capabilities supported by a first band combination, and each group of total aggregated bandwidths in the at least one group of total aggregated bandwidths includes a first total aggregated bandwidth and a second total aggregated bandwidth.

The first total aggregated bandwidth indicates a total aggregated bandwidth of carriers in a time division duplex band in the first band combination, and the second total aggregated bandwidth indicates a total aggregated bandwidth of carriers in a frequency division duplex band in the first band combination; and/or

the first total aggregated bandwidth indicates a total aggregated bandwidth of carriers in a band with a frequency within a first frequency range, and the second total aggregated bandwidth indicates a total aggregated bandwidth of carriers in a band with a frequency within a second frequency range, where the first frequency range does not overlap the second frequency range. The first frequency range may be specifically an FR1 band, and the second frequency range may be specifically an FR2 band. Alternatively, the first frequency range and the second frequency range may be other frequency ranges. This is not limited in this application.

In some implementations, the capability information includes fourth information, the fourth information includes a feature set combination, and there is a correspondence between the fourth information and the feature set combination. A specific correspondence may be determined based on an actual situation. For example, in some cases, the fourth information may correspond to one feature set combination; and in some cases, the fourth information corresponds to a plurality of feature set combinations. Alternatively, it may be understood that in some cases, the fourth information may correspond to one row of feature sets; and in some cases, the fourth information corresponds to a plurality of rows of feature sets. Content indicated by a specific feature set is not limited in this application, for example, may be a carrier bandwidth, a number of MIMO layers, or a subcarrier spacing capability of the terminal device.

In some implementations, the fourth information includes at least one group of feature set combinations, and the at least one group of total aggregated bandwidths indicated by the third information is in one-to-one correspondence with the at least one group of feature set combinations indicated by the fourth information. The at least one group of total aggregated bandwidths and the at least one group of feature set combinations may be separately arranged in sequence. When one group of total aggregated bandwidths corresponds to a plurality of groups of feature set combinations, the terminal device may report the group of total aggregated bandwidths a plurality of times in the capability information, to ensure a correspondence between each group of total aggregated bandwidths and a feature set combination.

Form D

The capability information includes fifth information, the fifth information indicates a first processing capability, the first processing capability is a maximum value of a processing capability supported by M carriers, the M carriers are carriers in a first band or carriers in a first band combination, and M is a positive integer. In some implementations, M is a positive integer greater than or equal to 2.

In some implementations, the M carriers are all carriers in the first band, or the M carriers are all carriers in the first band combination. In some implementations, when the network device configures the M carriers for carrier aggregation or dual connectivity communication, a sum of processing capabilities determined based on a number of MIMO layers, a carrier bandwidth, and the like configured for each carrier is less than or equal to the first processing capability indicated by the fifth information. In some implementations, when the network device configures N of the M carriers for communication, a sum of processing capabilities of the N carriers is less than or equal to the first processing capability indicated by the fifth information.

In some implementations, the first processing capability is a perBCperband capability or a perFS capability. Optionally, the fifth information is reported in a FeatureSetDownlink/FeatureSetUplink information element. In some implementations, the first processing capability is a PerBC capability. Optionally, the fifth information is reported in a ca-ParametersNR/ca-ParametersNRDC information element.

When the M carriers are carriers in the first band combination, the M carriers satisfy one or more of the following: the M carriers are carriers in all TDD bands in the first band combination, or the M carriers are carriers in all FDD bands in the first band combination; or the M carriers are carriers in all bands within a first frequency range in the first band combination. For example, the first frequency range may be specifically FR1, FR2, FR2-2, or another frequency range. For another example, the M carriers may alternatively be all carriers in an FR1 TDD band, or all carriers in an FR1 FDD band, or all carriers in an FR2 TDD band. Therefore, the terminal device may report, by using the fifth information, a total processing capability supported by carriers in a TDD band, an FDD band, and/or a band within a specific frequency range, so that after receiving the fifth information, the network device can correctly analyze the processing capability supported by the carriers in the TDD band, the FDD band, and/or the band within the specific frequency range, thereby implementing normal communication between the terminal device and the network device.

In a possible manner, the maximum value of the processing capability supported by the M carriers may be replaced with a maximum value of an uplink processing capability supported by the terminal device on the M carriers and/or a maximum value of a downlink processing capability supported by the terminal device on the M carriers, or a maximum value of a processing capability supported by the terminal device on the M carriers for an uplink and/or a maximum value of a processing capability supported by the terminal device on the M carriers for a downlink.

In some implementations, a processing capability supported by a first carrier in the M carriers is determined based on at least one of the following: a number of MIMO layers, a channel bandwidth, a numerology (numerology), an SCS, a scaling factor, or an overhead, where the first carrier is any one of the M carriers. The channel bandwidth may refer to a value of the channel bandwidth supported by the first carrier in a unit of MHz or Hz; or the channel bandwidth may refer to a number of resource blocks (resource block, RB) in the channel bandwidth supported by the first carrier.

In some implementations, the processing capability supported by the first carrier is a product of the number of MIMO layers supported by the first carrier and the channel bandwidth supported by the first carrier. In some implementations, the processing capability supported by the first carrier may be understood as a maximum processing capability supported by the first carrier. In some implementations, the processing capability supported by the first carrier includes an uplink processing capability and/or a downlink processing capability supported by the first carrier. The downlink processing capability supported by the first carrier is a product of a number of downlink MIMO layers supported by the first carrier and a downlink channel bandwidth supported by the first carrier. The uplink processing capability supported by the first carrier is a product of a number of uplink MIMO layers supported by the first carrier and an uplink channel bandwidth supported by the first carrier.

In some implementations, the processing capability supported by the first carrier is a product of the number of MIMO layers supported by the first carrier, the channel bandwidth supported by the first carrier, and a first coefficient, where the first coefficient is associated with the SCS supported by the first carrier. In some implementations, the processing capability supported by the first carrier may be understood as a maximum processing capability supported by the first carrier. In some implementations, the processing capability supported by the first carrier includes an uplink processing capability and/or a downlink processing capability supported by the first carrier. The downlink processing capability supported by the first carrier is a product of a number of downlink MIMO layers supported by the first carrier, a downlink channel bandwidth supported by the first carrier, and a first coefficient, where the first coefficient is associated with a downlink SCS supported by the first carrier. The uplink processing capability supported by the first carrier is a product of a number of uplink MIMO layers supported by the first carrier, an uplink channel bandwidth supported by the first carrier, and a first coefficient, where the first coefficient is associated with an uplink SCS supported by the first carrier. The first coefficient associated with the downlink SCS may be the same as or different from the first coefficient associated with the uplink SCS.

In some implementations, the processing capability supported by the first carrier is a product of the number of MIMO layers supported by the first carrier, the channel bandwidth supported by the first carrier, a modulation order supported by the first carrier, and a first coefficient, where the first coefficient is associated with the SCS supported by the first carrier. In some implementations, the processing capability supported by the first carrier includes an uplink processing capability and/or a downlink processing capability supported by the first carrier. The downlink processing capability supported by the first carrier is a product of a number of downlink MIMO layers supported by the first carrier, a downlink channel bandwidth supported by the first carrier, a downlink modulation order supported by the first carrier, and a first coefficient, where the first coefficient is associated with a downlink SCS supported by the first carrier. The uplink processing capability supported by the first carrier is a product of a number of uplink MIMO layers supported by the first carrier, an uplink channel bandwidth supported by the first carrier, an uplink modulation order supported by the first carrier, and a first coefficient, where the first coefficient is associated with an uplink SCS supported by the first carrier.

In some implementations, the processing capability supported by the first carrier is a product of the number of MIMO layers supported by the first carrier, the channel bandwidth supported by the first carrier, a modulation order supported by the first carrier, and/or the scaling factor supported by the first carrier, and/or the overhead (overhead) supported by the first carrier, and a first coefficient, where the first coefficient is associated with the SCS supported by the first carrier. In some implementations, the processing capability supported by the first carrier includes an uplink processing capability and/or a downlink processing capability supported by the first carrier. The downlink processing capability supported by the first carrier is a product of a number of downlink MIMO layers supported by the first carrier, a downlink channel bandwidth supported by the first carrier, a downlink modulation order supported by the first carrier, and/or a scaling factor supported by the first carrier, and/or an overhead supported by the first carrier, and a first coefficient, where the first coefficient is associated with a downlink SCS supported by the first carrier. The uplink processing capability supported by the first carrier is a product of a number of uplink MIMO layers supported by the first carrier, an uplink channel bandwidth supported by the first carrier, an uplink modulation order supported by the first carrier, and/or a scaling factor supported by the first carrier, and/or an overhead supported by the first carrier, and a first coefficient, where the first coefficient is associated with an uplink SCS supported by the first carrier.

In some implementations, the first processing capability satisfies:

$$E \geq \sum_{i=1}^{M} \{[V^{(i)} \cdot W^{(i)} \cdot K^{(i)}\}.$$

E is the first processing capability, a value of i is 1, 2, ..., or M, $V^{(i)}$ is a number of MIMO layers supported by an $i^{th}$ carrier in the M carriers, $W^{(i)}$ is a channel bandwidth supported by the $i^{th}$ carrier in the M carriers, $K^{(i)}$ is the first coefficient, and $K^{(i)}$ is associated with an SCS supported by the $i^{th}$ carrier. Optionally, the first processing capability includes a first uplink processing capability and/or downlink processing capability. When the first processing capability in the foregoing formula is specifically the first downlink capability, $V^{(i)}$ is a number of downlink MIMO layers supported by the $i^{th}$ carrier in the M carriers, $W^{(i)}$ is a downlink channel bandwidth supported by the $i^{th}$ carrier in the M carriers, $K^{(i)}$ is the first coefficient, and $K^{(i)}$ is associated with a downlink SCS supported by the $i^{th}$ carrier. When the first processing capability in the foregoing formula is specifically the first uplink capability, $V^{(i)}$ is a number of uplink MIMO layers supported by the $i^{th}$ carrier in the M carriers, $W^{(i)}$ is an uplink channel bandwidth supported by the $i^{th}$ carrier in the M carriers, $K^{(i)}$ is the first coefficient, and $K^{(i)}$ is associated with an uplink SCS supported by the $i^{th}$ carrier.

In some implementations, the capability information further includes M pieces of eighth information, M pieces of ninth information, M pieces of tenth information, and M pieces of eleventh information that are in one-to-one correspondence with the M carriers, where each piece of eighth information indicates a first MIMO layer number capability supported by a corresponding carrier, each piece of ninth information indicates a second MIMO layer number capability supported by the corresponding carrier, each piece of tenth information indicates a first bandwidth capability supported by the corresponding carrier, and each piece of eleventh information indicates a second bandwidth capability supported by the corresponding carrier.

When the communication apparatus is a first-type base station, the communication apparatus determines, based on the M pieces of eighth information and the M pieces of tenth information, the number of MIMO layers and the channel bandwidth that are supported by the first carrier, where the first carrier is any one of the M carriers.

When the communication apparatus is a second-type base station, the communication apparatus determines, based on the fifth information, the M pieces of ninth information, and the M pieces of eleventh information, the number of MIMO layers and the channel bandwidth that are supported by the first carrier.

Form E

The capability information includes twelfth information, the twelfth information indicates a maximum data rate (data rate) supported by M carriers, the M carriers are carriers in a first band or carriers in a first band combination, and M is a positive integer. In some implementations, M is a positive integer greater than or equal to 2.

In some implementations, the M carriers are all carriers in the first band, or the M carriers are all carriers in the first band combination.

In some implementations, the maximum data rate supported by the M carriers includes a maximum uplink data rate supported by the M carriers and/or a maximum downlink data rate supported by the M carriers. Alternatively, the maximum data rate supported by the M carriers includes a maximum data rate supported by the M carriers for an uplink and/or a maximum data rate supported by the M carriers for a downlink.

In some implementations, the maximum data rate satisfies:

$$S \geq 10^{-6} \cdot \sum_{j=1}^{M} [v_{layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot (1 - OH^{(j)})],$$

where

S is the maximum data rate, a value of J is 1, 2, ..., or M, $v_{layers}^{(j)}$ is a number of MIMO layers of a $j^{th}$ carrier in the M

carriers, $Q_m^{(j)}$ is a modulation order of the j<sup>th</sup> carrier in the M carriers, f<sup>(j)</sup> is a scaling factor of the j<sup>th</sup> carrier in the M carriers,

$R_{max}$ is a maximum code rate, $N_{PRB}^{BW(j)}$ is a maximum number of resource blocks included in the j<sup>th</sup> carrier in the M carriers when a bandwidth is a channel bandwidth BW(j) in a numerology μ, $T_s^\mu$ is average orthogonal frequency division multiplexing (orthogonal frequency division multiplexing, OFDM) symbol duration of the j<sup>th</sup> carrier in the M carriers in the numerology μ, and OH<sup>(j)</sup> is an overhead corresponding to the j<sup>th</sup> carrier in the M carriers.

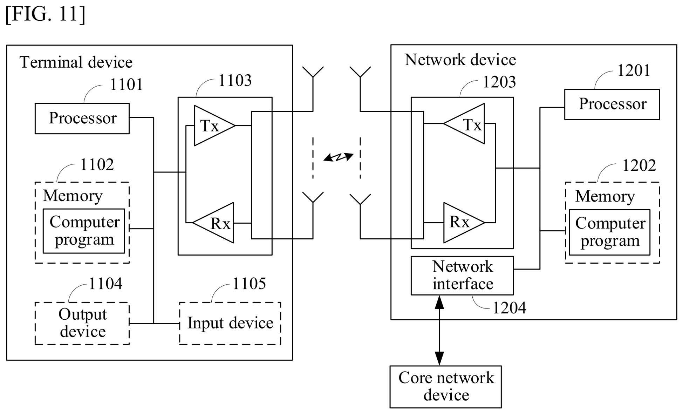

FIG. 11 is a diagram of a communication system according to an embodiment of this application.

The first communication apparatus includes at least one processor 1101 and at least one transceiver 1103. Optionally, the first communication apparatus may further include at least one memory 1102, at least one output device 1104, or at least one input device 1105.

The processor 1101, the memory 1102, and the transceiver 1103 are connected through a communication line. The communication line may include a path for transmitting information between the foregoing components.

The processor 1101 may be a central processing unit (central processing unit, CPU), or may be another general-purpose processor, a digital signal processor (digital signal processor, DSP), an application-specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor. During specific implementation, in an embodiment, the processor 1101 may alternatively include a plurality of CPUs, and the processor 1101 may be a single-core processor or a multi-core processor. The processor herein may be one or more devices, circuits, or processing cores configured to process data.

The memory 1102 may be an apparatus having a storage function. For example, the memory may be a read-only memory (read-only memory, ROM) or another type of static storage device that can store static information and instructions, a random access memory (random access memory, RAM) or another type of dynamic storage device that can store information and instructions, or may be a programmable read-only memory (programmable ROM, PROM), an erasable programmable read-only memory (erasable PROM, EPROM), an electrically erasable programmable read-only memory (electrically erasable programmable read-only memory, EEPROM), a compact disc read-only memory (compact disc read-only memory, CD-ROM) or another compact disk storage, an optical disk storage (including a compact disc, a laser disc, an optical disc, a digital versatile disc, a Blu-ray disc, or the like), a magnetic disk storage medium or another magnetic storage device, or any other medium that can be configured to carry or store desired program code in a form of instructions or a data structure and that can be accessed by a computer. However, this is not limited thereto. The memory 1102 may exist independently, and is connected to the processor 1101 through the communication line. Alternatively, the memory 1102 may be integrated with the processor 1101.

The memory 1102 is configured to store computer-executable instructions for executing the solutions of this application, and the processor 1101 controls the execution. Specifically, the processor 1101 is configured to execute the computer-executable instructions stored in the memory 1102, to implement the frequency resource scheduling in embodiments of this application.

Alternatively, optionally, in this embodiment of this application, the processor 1101 may perform processing related functions in the frequency resource scheduling provided in the following embodiment of this application, and the transceiver 1103 is responsible for communicating with another device or a communication network. This is not specifically limited in embodiments of this application.

Optionally, the computer-executable instructions in embodiments of this application may also be referred to as application program code or computer program code. This is not specifically limited in embodiments of this application.

The transceiver 1103 may use any transceiver-type apparatus, and is configured to communicate with another device or a communication network such as the Ethernet, a RAN, or a wireless local area network (wireless local area network, WLAN). The transceiver 1103 includes a transmitter (transmitter, Tx) and a receiver (receiver, Rx).

The output device 1104 communicates with the processor 1101, and may display information in a plurality of manners. For example, the output device 1104 may be a liquid crystal display (liquid crystal display, LCD), a light emitting diode (light emitting diode, LED) display device, a cathode ray tube (cathode ray tube, CRT) display device, or a projector (projector).

The input device 1105 communicates with the processor 1101, and may accept an input of a user in a plurality of manners. For example, the input device 505 may be a mouse, a keyboard, a touchscreen device, or a sensing device.

The second communication apparatus includes at least one processor 1201, at least one transceiver 1203, and at least one network interface 1204. Optionally, the second communication apparatus may further include at least one memory 1202. The processor 1201, the memory 1202, the transceiver 1203, and the network interface 1204 are connected through a communication line. The network interface 1204 is configured to connect to a core network device through a link (for example, an S1 interface), or connect to a network interface of another second communication apparatus through a wired or wireless link (for example, an X2 interface) (not shown in FIG. 11). This is not specifically limited in embodiments of this application. In addition, for related descriptions of the processor 1201, the memory 1202, and the transceiver 1203, refer to the descriptions of the processor 1201, the memory 1202, and the transceiver 1203 in the first device. Details are not described herein again.

In addition, an embodiment of this application further provides a chip. The chip obtains instructions and executes the instructions to implement the foregoing methods.

Optionally, in an implementation, the chip includes a processor and a communication interface. The processor reads, through the communication interface, instructions stored in a memory, to perform the foregoing methods.

Optionally, in an implementation, the chip may further include a memory. The memory stores instructions, the processor is configured to execute the instructions stored in the memory. When the instructions are executed, the processor is configured to perform the foregoing methods.

An embodiment of this application further provides a computer-readable storage medium. The computer-readable storage medium stores instructions. The instructions are used to implement the methods in the foregoing method embodiments.

An embodiment of this application further provides a computer program product including instructions. The instructions are used to implement the methods in the foregoing method embodiments.

Terms such as "component", "module", and "system" used in this specification indicate computer-related entities, hardware, firmware, combinations of hardware and software, software, or software being executed. For example, a component may be, but is not limited to, a process that runs on a processor, a processor, an object, an executable file, an execution thread, a program, and/or a computer. As illustrated by using figures, both a computing device and an application that runs on the computing device may be components. One or more components may reside within a process and/or an execution thread, and a component may be located on one computer and/or distributed between two or more computers. In addition, these components may be executed from various computer-readable media that store various data structures. For example, the components may communicate by using a local and/or remote process and based on, for example, a signal having one or more data packets (for example, data from two components interacting with another component in a local system, a distributed system, and/or across a network such as the internet interacting with other systems by using the signal).

A person of ordinary skill in the art may be aware that, in combination with the examples described in embodiments disclosed in this specification, units and algorithm steps may be implemented by using electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one place, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

**Claims**

1. A communication method, comprising:

   receiving a capability enquiry request; and
   sending capability information, wherein the capability information comprises first information, the first information indicates a total aggregated bandwidth supported by a first band combination, the first band combination comprises at least one band, and each of the at least one band comprises at least one carrier, wherein
   a channel bandwidth supported by a first carrier is associated with the first information, the first carrier is used for communication between a terminal device and a network device, and the first carrier belongs to a first band in the first band combination.

2. The method according to claim 1, wherein the channel bandwidth supported by the first carrier is less than or equal to a maximum value of a channel bandwidth supported by the first band, and a sum of channel bandwidths supported by a plurality of carriers is less than or equal to the total aggregated bandwidth supported by the first band combination, wherein the plurality of carriers are all carriers in all bands comprised in the first band combination.

3. The method according to claim 2, wherein a channel bandwidth supported by a second carrier is less than or equal to a maximum value of a channel bandwidth supported by a band corresponding to the second carrier, and the second carrier is any carrier in the plurality of carriers.

4. The method according to any one of claims 1 to 3, wherein the capability information further comprises second information, and the second information indicates a maximum channel bandwidth supported by each of the plurality of carriers.

5. The method according to claim 4, wherein a channel bandwidth supported by a third carrier is less than or equal to a maximum channel bandwidth of the third carrier that is indicated by the second information, the third carrier belongs to the plurality of carriers, the plurality of carriers are all the carriers in all the bands comprised in the first band combination, and the sum of the channel bandwidths supported by the plurality of carriers is less than or equal to the total aggregated bandwidth supported by the first band combination.

6. The method according to any one of claims 1 to 5, wherein the total aggregated bandwidth comprises a total uplink aggregated bandwidth and a total downlink aggregated bandwidth, wherein

   a downlink channel bandwidth supported by the first carrier is less than or equal to a maximum value of a downlink channel bandwidth supported by the first band, and a sum of downlink channel bandwidths supported by the plurality of carriers is less than or equal to a total downlink aggregated bandwidth supported by the first band combination; and/or
   an uplink channel bandwidth supported by the first carrier is less than or equal to a maximum value of an uplink channel bandwidth supported by the first band, and a sum of uplink channel bandwidths supported by the plurality of carriers is less than or equal to a total uplink aggregated bandwidth supported by the first band combination.

7. A communication method, comprising:

   receiving a capability enquiry request; and
   sending capability information, wherein the capability information comprises third information, the third information indicates at least one group of total aggregated bandwidth capabilities supported by a first band combination, and each group of total aggregated bandwidths in the at least one group of total aggregated bandwidths comprises a first total aggregated bandwidth and a second total aggregated bandwidth, wherein
   the first total aggregated bandwidth indicates a total aggregated bandwidth of carriers in a time division duplex band in the first band combination, and the second total aggregated bandwidth indicates a total aggregated bandwidth of carriers in a frequency division duplex band in the first band combination; and/or
   the first total aggregated bandwidth indicates a total aggregated bandwidth of carriers in a band with a frequency within a first frequency range, and the second total aggregated bandwidth indicates a total aggregated bandwidth of carriers in a band with a frequency within a second frequency range, wherein the first frequency range does not overlap the second frequency range.

8. The method according to claim 7, wherein the capability information further comprises fourth information, the fourth information comprises a feature set combination, and there is a correspondence between the fourth information and the feature set combination.

9. The method according to claim 8, wherein the fourth information comprises at least one group of feature set combinations, and the at least one group of total aggregated bandwidths indicated by the third information is in one-to-one correspondence with the at least one group of feature set combinations indicated by the fourth information.

10. A communication method, comprising:

receiving a capability enquiry request; and
sending capability information, wherein the capability information comprises fifth information, the fifth information indicates a first processing capability, the first processing capability is a maximum value of a processing capability supported by M carriers, the M carriers are carriers in a first band or carriers in a first band combination, and M is a positive integer.

11. The method according to claim 10, wherein
a processing capability supported by a first carrier in the M carriers is determined based on at least one of the following: a number of multiple-input multiple-output MIMO layers, a channel bandwidth, a numerology numerology, a subcarrier spacing SCS, a scaling factor, or an overhead, wherein the first carrier is any one of the M carriers.

12. The method according to claim 11, wherein the processing capability supported by the first carrier is a product of the number of MIMO layers supported by the first carrier, the channel bandwidth supported by the first carrier, and a first coefficient, wherein the first coefficient is associated with the SCS supported by the first carrier.

13. The method according to any one of claims 10 to 12, wherein the first processing capability satisfies:

$$E \geq \sum_{i=1}^{M} \{[V^{(i)} \cdot W^{(i)} \cdot K^{(i)}\},$$

wherein
E is the first processing capability, a value of i is 1, 2, ..., or M, $V^{(i)}$ is a number of MIMO layers supported by an $i^{th}$ carrier in the M carriers, $W^{(i)}$ is a channel bandwidth supported by the $i^{th}$ carrier, $K^{(i)}$ is the first coefficient, and $K^{(i)}$ is associated with an SCS supported by the $i^{th}$ carrier.

14. The method according to any one of claims 10 to 13, wherein the M carriers are all carriers in the first band, or the M carriers are all carriers in the first band combination.

15. The method according to any one of claims 10 to 13, wherein when the M carriers are carriers in the first band combination, the M carriers are carriers in all time division duplex TDD bands in the first band combination, or the M carriers are carriers in all frequency division duplex FDD bands in the first band combination; and/or the at least one carrier is carriers in all bands within a first frequency range in the first band combination.

16. The method according to any one of claims 10 to 15, wherein the capability information further comprises M pieces of sixth information and M pieces of seventh information that are in one-to-one correspondence with the M carriers, wherein each piece of sixth information indicates a maximum number of MIMO layers supported by a corresponding carrier, and each piece of seventh information indicates a maximum channel bandwidth supported by the corresponding carrier.

17. The method according to any one of claims 10 to 15, wherein the capability information further comprises M pieces of eighth information, M pieces of ninth information, M pieces of tenth information, and M pieces of eleventh information that are in one-to-one correspondence with the M carriers, wherein each piece of eighth information indicates a first MIMO layer number capability supported by a corresponding carrier, each piece of ninth information indicates a second MIMO layer number capability supported by the corresponding carrier, each piece of tenth information indicates a first bandwidth capability supported by the corresponding carrier, and each piece of eleventh information indicates a second bandwidth capability supported by the corresponding carrier, wherein

the M pieces of eighth information and the M pieces of tenth information are used by a first-type base station to determine the number of MIMO layers and the channel bandwidth that are supported by the first carrier, and the first carrier is any one of the M carriers; and
the fifth information, the ninth information, and the eleventh information are used by a second-type base station to determine the number of MIMO layers and the channel bandwidth that are supported by the first carrier.

18. The method according to any one of claims 11 to 17, wherein the maximum value of the processing capability supported by the M carriers comprises a maximum value of an uplink processing capability supported by the M carriers and/or a maximum value of a downlink processing capability supported by the M carriers.

19. A communication method, comprising:

receiving a capability enquiry request; and
sending capability information, wherein the capability information comprises twelfth information, the twelfth information indicates a maximum data rate supported by M carriers, the M carriers are carriers in a first band or carriers in a first band combination, and M is a positive integer.

20. The method according to claim 19, wherein the maximum data rate satisfies:

$$S \geq \sum_{j=1}^{M} [v_{layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot (1 - OH^{(j)})],$$

wherein

S is the maximum data rate, a value of J is 1, 2, ..., or M, $v_{layers}^{(j)}$ is a number of MIMO layers of a $j^{th}$ carrier in the M carriers, $Q_m^{(j)}$ is a modulation order of the $j^{th}$ carrier, $f^{(j)}$ is a scaling factor of the $j^{th}$ carrier, $R_{max}$ is a maximum code rate, $N_{PRB}^{BW(j)}$ is a maximum number of resource blocks comprised in the $j^{th}$ carrier when a bandwidth is a channel bandwidth BW(j) in a numerology μ, $T_s^{\mu}$ is average orthogonal frequency division multiplexing OFDM symbol duration of the $j^{th}$ carrier in the numerology μ, and $OH^{(j)}$ is an overhead corresponding to the $j^{th}$ carrier.

21. The method according to claim 19 or 20, wherein the M carriers are all carriers in the first band, or the M carriers are all carriers in the first band combination.

22. The method according to any one of claims 19 to 21, wherein when the M carriers are carriers in the first band combination, the M carriers are carriers in all time division duplex TDD bands in the first band combination, or the M carriers are carriers in all frequency division duplex FDD bands in the first band combination; and/or the at least one carrier is carriers in all bands within a first frequency range in the first band combination.

23. The method according to any one of claims 19 to 22, wherein the maximum data rate supported by the M carriers comprises a maximum uplink data rate supported by the M carriers and/or a maximum downlink data rate supported by the M carriers.

24. A communication method, comprising:

sending a capability enquiry request; and
receiving capability information, wherein the capability information comprises first information, the first information indicates a total aggregated bandwidth supported by a first band combination, the first band combination comprises at least one band, and each of the at least one band comprises at least one carrier, wherein a channel bandwidth supported by a first carrier is associated with the first information, the first carrier is used for communication between the terminal device and a network device, and the first carrier belongs to a first band in the first band combination.

25. The method according to claim 24, wherein the channel bandwidth supported by the first carrier is less than or equal to a maximum value of a channel bandwidth supported by the first band, and a sum of channel bandwidths supported by a plurality of carriers is less than or equal to the total aggregated bandwidth supported by the first band combination, wherein the plurality of carriers are all carriers in all bands comprised in the first band combination.

26. The method according to claim 25, wherein a channel bandwidth supported by a second carrier is less than or equal to a maximum value of a channel bandwidth supported by a band corresponding to the second carrier, and the second carrier is any carrier in the plurality of carriers.

27. The method according to any one of claims 24 to 26, wherein the capability information further comprises second information, and the second information indicates a maximum channel bandwidth supported by each of the plurality of carriers.

28. The method according to claim 27, wherein a channel bandwidth supported by a third carrier is less than or equal to a maximum channel bandwidth of the third carrier that is indicated by the third information, the third carrier belongs to the plurality of carriers, the plurality of carriers are all the carriers in all the bands comprised in the first band combination, and the sum of the channel bandwidths supported by the plurality of carriers is less than or equal to the total aggregated bandwidth supported by the first band combination.

29. The method according to any one of claims 24 to 28, wherein the total aggregated bandwidth comprises a total uplink aggregated bandwidth and a total downlink aggregated bandwidth, wherein

a downlink channel bandwidth supported by the first carrier is less than or equal to a maximum value of a downlink channel bandwidth supported by the first band, and a sum of downlink channel bandwidths supported by the plurality of carriers is less than or equal to a total downlink aggregated bandwidth supported by the first band combination; and/or
an uplink channel bandwidth supported by the first carrier is less than or equal to a maximum value of an uplink channel bandwidth supported by the first band, and a sum of uplink channel bandwidths supported by the plurality of carriers is less than or equal to a total uplink aggregated bandwidth supported by the first band combination.

30. A communication method, wherein the method comprises:

receiving a capability enquiry request; and
sending capability information, wherein the capability information comprises third information, the third information indicates at least one group of total aggregated bandwidth capabilities supported by a first band combination, and each group of total aggregated bandwidths in the at least one group of total aggregated bandwidths comprises a first total aggregated bandwidth and a second total aggregated bandwidth, wherein
the first total aggregated bandwidth indicates a total aggregated bandwidth of carriers in a time division duplex band in the first band combination, and the second total aggregated bandwidth indicates a total aggregated bandwidth of carriers in a frequency division duplex band in the first band combination; and/or
the first total aggregated bandwidth indicates a total aggregated bandwidth of carriers in a band with a frequency within a first frequency range, and the second total aggregated bandwidth indicates a total aggregated bandwidth of carriers in a band with a frequency within a second frequency range, wherein the first frequency range does not overlap the second frequency range.

31. The method according to claim 30, wherein the capability information further comprises fourth information, the fourth information comprises a feature set combination, and there is a correspondence between the fourth information and the feature set combination.

32. The method according to claim 31, wherein the fourth information comprises at least one group of feature set combinations, and the at least one group of total aggregated bandwidths indicated by the fourth information is in one-to-one correspondence with the at least one group of feature set combinations.

33. A communication method, comprising:

sending a capability enquiry request; and
receiving capability information, wherein the capability information comprises fifth information, the fifth information indicates a first processing capability, the first processing capability is a maximum value of a processing capability supported by M carriers, the M carriers are carriers in a first band or carriers in a first band combination, and M is a positive integer.

34. The method according to claim 33, wherein
a processing capability supported by a first carrier in the M carriers is determined based on at least one of the following: a number of MIMO layers, a channel bandwidth, a numerology, an SCS, a scaling factor, or an overhead, wherein the first carrier is any one of the M carriers.

35. The method according to claim 33 or 34, wherein the processing capability supported by the first carrier is a product of the number of MIMO layers supported by the first carrier, the channel bandwidth supported by the first carrier, and a first coefficient, wherein the first coefficient is associated with the SCS supported by the first carrier.

36. The method according to any one of claims 33 to 35, wherein the first processing capability satisfies:

$$\mathrm{E} \geq \sum_{i=1}^{M} \left\{ [V^{(i)} \cdot W^{(i)} \cdot K^{(i)} \right\},$$

wherein
E is the first processing capability, a value of i is 1, 2, ..., or M, $V^{(i)}$ is a number of MIMO layers supported by an $i^{th}$ carrier in the M carriers, $W^{(i)}$ is a channel bandwidth supported by the $i^{th}$ carrier, $K^{(i)}$ is the first coefficient, and $K^{(i)}$ is associated with an SCS supported by the $i^{th}$ carrier.

37. The method according to any one of claims 33 to 36, wherein the M carriers are all carriers in the first band, or the M carriers are all carriers in the first band combination.

38. The method according to any one of claims 33 to 36, wherein when the M carriers are carriers in the first band combination, the M carriers are carriers in all TDD bands in the first band combination, or the M carriers are carriers in all FDD bands in the first band combination; and/or the at least one carrier is carriers in all bands within a first frequency range in the first band combination.

39. The method according to any one of claims 33 to 38, wherein the capability information further comprises M pieces of sixth information and M pieces of seventh information that are in one-to-one correspondence with the M carriers, wherein each piece of sixth information indicates a maximum number of MIMO layers supported by a corresponding carrier, and each piece of seventh information indicates a maximum channel bandwidth supported by the corresponding carrier; and
the method further comprises: determining, based on the fifth information, the sixth information, and the seventh information, the number of MIMO layers and the channel bandwidth that are supported by the first carrier.

40. The method according to any one of claims 33 to 38, wherein the capability information further comprises M pieces of eighth information, M pieces of ninth information, M pieces of tenth information, and M pieces of eleventh information that are in one-to-one correspondence with the M carriers, wherein each piece of eighth information indicates a first MIMO layer number capability supported by a corresponding carrier, each piece of ninth information indicates a second MIMO layer number capability supported by the corresponding carrier, each piece of tenth information indicates a first bandwidth capability supported by the corresponding carrier, and each piece of eleventh information indicates a second bandwidth capability supported by the corresponding carrier, wherein

when the method is performed by a first-type base station, the method further comprises: determining, based on the M pieces of eighth information and the M pieces of tenth information, the number of MIMO layers and the channel bandwidth that are supported by the first carrier, wherein the first carrier is any one of the M carriers; and
when the method is performed by a second-type base station, the method further comprises: determining, based on the fifth information, the M pieces of ninth information, and the M pieces of eleventh information, the number of MIMO layers and the channel bandwidth that are supported by the first carrier.

41. The method according to any one of claims 33 to 38, wherein the maximum value of the processing capability supported by the M carriers comprises a maximum value of an uplink processing capability supported by the M carriers and/or a maximum value of a downlink processing capability supported by the M carriers.

42. A communication method, comprising:

sending a capability enquiry request; and
receiving capability information, wherein the capability information comprises twelfth information, the twelfth information indicates a maximum data rate supported by M carriers, the M carriers are carriers in a first band or carriers in a first band combination, and M is a positive integer.

43. The method according to claim 42, wherein the maximum data rate satisfies:

$$S \geq 10^{-6} \cdot \sum_{j=1}^{M} [v_{layers}^{(j)} \cdot Q_m^{(j)} \cdot f^{(j)} \cdot R_{max} \cdot \frac{N_{PRB}^{BW(j),\mu} \cdot 12}{T_s^{\mu}} \cdot (1 - OH^{(j)})],$$

wherein

S is the maximum data rate, a value of J is 1, 2, ..., or M, $v_{layers}^{(j)}$ is a number of MIMO layers of a $j^{th}$ carrier in the M carriers, $Q_m^{(j)}$ is a modulation order of the $j^{th}$ carrier, $f^{(j)}$ is a scaling factor of the $j^{th}$ carrier, $R_{max}$ is a maximum code rate, $N_{PRB}^{BW(j)}$ is a maximum number of resource blocks comprised in the $j^{th}$ carrier when a bandwidth is a channel bandwidth BW(j) in a numerology $\mu$, $T_s^{\mu}$ is average orthogonal frequency division multiplexing OFDM symbol duration of the $j^{th}$ carrier in the numerology $\mu$, and $OH^{(j)}$ is an overhead corresponding to the $j^{th}$ carrier.

44. The method according to claim 42 or 43, wherein the M carriers are all carriers in the first band, or the M carriers are all carriers in the first band combination.

45. The method according to any one of claims 42 to 44, wherein when the M carriers are carriers in the first band combination, the M carriers are carriers in all time division duplex TDD bands in the first band combination, or the M carriers are carriers in all frequency division duplex FDD bands in the first band combination; and/or the at least one carrier is carriers in all bands within a first frequency range in the first band combination.

46. The method according to any one of claims 42 to 45, wherein the maximum data rate supported by the M carriers comprises a maximum uplink data rate supported by the M carriers and/or a maximum downlink data rate supported by the M carriers.

47. A communication apparatus, configured to perform the method according to any one of claims 1 to 23, wherein the communication apparatus comprises a transceiver module and a processing module.

48. A communication apparatus, configured to perform the method according to any one of claims 24 to 46, wherein the communication apparatus comprises a transceiver module and a processing module.

49. A chip, comprising a processor, wherein the processor is coupled to a memory, the memory is configured to store a computer program, and the processor is configured to execute the computer program stored in the memory, to enable the chip to perform the method according to any one of claims 1 to 46.

50. A computer-readable storage medium, wherein the storage medium stores a computer program or instructions, and when the computer program or the instructions are executed by a processor, the method according to any one of claims 1 to 46 is implemented.

51. A computer product, wherein when the computer product runs on a computer, the method according to any one of claims 1 to 46 is performed.

52. A communication system, comprising a terminal device and a network device, wherein the terminal device is configured to perform the method according to any one of claims 1 to 23, and the network device is configured to perform the method according to any one of claims 24 to 46.

[FIG. 1]

[FIG. 2]

CC1    CC2    CC3  CC4    CC5

Band A    Band B    Band C

Band combination {band A, band B, band C}

[FIG. 3]

Band combination    Band A    Band B

Feature set
combination 1    FS1    FS2

Feature set
combination 2    FS3    FS4

[FIG. 4]

Terminal
device

Network
device

S410: Capability enquiry
request

S420: Capability information

[FIG. 5]

[FIG. 6]

[FIG. 7]

[FIG. 8]

| | |
|---|---|
| Terminal device | Network device |

S810: Capability enquiry request

S820: Capability information

[FIG. 9]

Communication apparatus

Transceiver module 910

Processing module 920

[FIG. 10]

Communication apparatus

Transceiver module 1010

Processing module 1020

[FIG. 11]

## INTERNATIONAL SEARCH REPORT

| | International application No. |
|---|---|
| | **PCT/CN2024/108084** |

| A. | CLASSIFICATION OF SUBJECT MATTER |
|---|---|

H04W 8/24(2009.01)i

According to International Patent Classification (IPC) or to both national classification and IPC

| B. | FIELDS SEARCHED |
|---|---|

Minimum documentation searched (classification system followed by classification symbols)

    IPC:H04W

Documentation searched other than minimum documentation to the extent that such documents are included in the fields searched

Electronic data base consulted during the international search (name of data base and, where practicable, search terms used)

    CNTXT, CNKI, ENTXTC, EPTXT, USTXT, WOTXT, 3GPP: MIMO层数, 处理能力, 带宽, 聚合, 开销, 能力, 频段, 速度, 速率, 缩放因子, 载波, 支持, 子载波间隔, 组合, bandwidth, carrier, numerology, rate, SCS, speed, band combination

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 114731260 A (BEIJING XIAOMI MOBILE SOFTWARE CO., LTD.) 08 July 2022 (2022-07-08) description, paragraphs [0108]-[0461] | 1-9, 19-32, 42-52 |
| X | CN 112040474 A (HUAWEI TECHNOLOGIES CO., LTD.) 04 December 2020 (2020-12-04) description, paragraphs [0105]-[0372] | 10-18, 33-41, 47-52 |
| A | CN 116017750 A (HUAWEI TECHNOLOGIES CO., LTD.) 25 April 2023 (2023-04-25) entire document | 1-52 |
| A | US 2023089990 A1 (HUAWEI TECHNOLOGIES CO., LTD.) 23 March 2023 (2023-03-23) entire document | 1-52 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **17 October 2024** | **23 October 2024** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

### INTERNATIONAL SEARCH REPORT
Information on patent family members

| Patent document cited in search report | | | Publication date (day/month/year) | Patent family member(s) | | | Publication date (day/month/year) |
|---|---|---|---|---|---|---|---|
| CN | 114731260 | A | 08 July 2022 | None | | | |
| CN | 112040474 | A | 04 December 2020 | None | | | |
| CN | 116017750 | A | 25 April 2023 | None | | | |
| US | 2023089990 | A1 | 23 March 2023 | EP | 4145745 | A1 | 08 March 2023 |
| | | | | EP | 4145745 | A4 | 01 November 2023 |
| | | | | WO | 2021233217 | A1 | 25 November 2021 |

Form PCT/ISA/210 (patent family annex) (July 2022)

**REFERENCES CITED IN THE DESCRIPTION**

**Patent documents cited in the description**

- CN 202311022708
- CN 202311243053